# EUROPEAN PATENT APPLICATION

(11) **EP 2 424 018 A1**
(43) Date of publication of application: **29.02.2012**
(21) Application number: 11178762.8
(22) Date of filing: 25.08.2011
(51) Int. Cl.: H01M 8/00, C08G 65/40

(54) **Polyarylene block copolymer having sulfonic acid group and use thereof**

(30) Priority: 27.08.2010 JP 2010190650
(71) Applicant: JSR Corporation, Minato-ku Tokyo 105-8640 (JP); Honda Motor Co., Ltd., Minato-ku Tokyo 107-8556 (JP)
(72) Inventor: Yamakawa, Yoshitaka, Minato-ku Tokyo 1058640 (JP); Kadota, Toshiaki, Minato-ku Tokyo 1058640 (JP); Murakami, Takuya, Minato-ku Tokyo 1058640 (JP); Tsunoda, Yuuji, Minato-ku Tokyo 1058640 (JP); Iguchi, Masaru, Wako-shi Saitama 3510193 (JP); Fukuda, Kaoru, Wako-shi Saitama 3510193 (JP)
(74) Representative: TBK

(57) **Abstract**

A polyarylene copolymer having a sulfonic acid group which has high proton conductivity and reduced swelling in hot water and reduced shrinkage in drying; a solid polymer electrolyte and a proton conductive membrane comprising the copolymer; and a membrane-electrode assembly using these.

The polyarylene block copolymer comprises a polymer segment (A) having a sulfonic acid group, and a polymer segment (B) having substantially no sulfonic acid group, the polymer segment (B) having substantially no sulfonic acid group comprising a structural unit represented by the following formula (1).

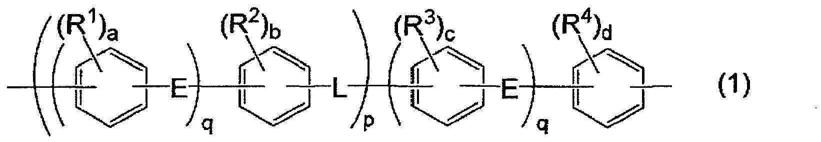

## Description

### [Technical Field]

The present invention relates to a novel polyarylene block copolymer having a sulfonic acid group, and a solid polymer electrolyte and a proton conductive membrane comprising the polyarylene block copolymer having a sulfonic acid group.

### [Background Art]

Electrolyte is usually used in liquid state, such as (aqueous) electrolyte solutions, but recently the tendency has been increasing to use solid electrolytes. This tendency is firstly because those solid electrolytes have good processability in application in electric and electronic materials, and secondly because of the transitions to overall size and weight reduction and electric power saving.

Inorganic and organic proton conductive materials have been known. As the inorganic materials, hydrates such as uranyl phosphate are used. However, it is difficult that the inorganic materials are enough contacted with substrate or electrode interface. As a result, many problems in forming a conductive layer on a substrate or an electrode are caused.

On the other hand, the organic materials include polymers that belong to cation exchange resins with examples including sulfonated vinyl polymers such as polystyrenesulfonic acid, perfluoroalkylsulfonic acid polymers represented by Nafion (product name; manufactured by DuPont), and perfluoroalkylcarboxylic acid polymers; and organic polymers obtained by introducing sulfonic acid groups or phosphoric acid groups in heat resistant polymers such as polybenzimidazole and polyether ether ketone.

In the manufacturing of fuel cells, an electrolyte membrane of the perfluoroalkylsulfonic acid polymer is sandwiched between electrodes and heat processed by hot pressing or the like to give a membrane-electrode assembly. The fluorine-containing electrolyte membranes are thermally deformed at relatively low temperatures around 80°C and can be adhered to others easily. However, the temperature can rise to 80°C or above by reaction heat during operation of the fuel cells. In this case, the electrolyte membrane is softened and creeps to cause short circuits between the electrodes, resulting in power generation failure.

To prevent these problems, the thickness of the electrolyte membranes is increased to a certain level or fuel cells are designed such that the power generation temperature will not exceed 80°C. Consequently, the maximum output of power generation is limited.

To solve poor mechanical characteristics at high temperatures of the electrolyte formed from the perfluoroalkylsulfonic acid polymers due to low thermal deformation temperature of the polymers, solid polymer electrolyte membranes that have aromatic polymers used in engineering plastics have been developed.

For example, U.S. Patent No. 5, 403, 675 (Patent Document 1) discloses solid polymer electrolytes comprising a rigid-rod sulfonated polyphenylene. This polymer contains a main component polymer obtained by polymerizing an aromatic compound composed of phenylene chains, the main component polymer being reacted with a sulfonating agent and thus having a sulfonic acid group introduced thereto. The electrolyte membranes of this polymer have a thermal deformation temperature of 180°C or above and are excellent in creeping resistance at high temperatures.

However, these electrolyte membranes have large swelling in hot water and large shrinkage in drying, and thus are still insufficient for use in the electrolyte membranes employed for the solid polymer fuel cells.

### [Citation List]

### [Patent Document]

Patent Document 1: U.S. Patent No. 5,403,675

### [Summary of the Invention]

### [Problem to be Solved by the Invention]

The proton conductive membrane in Patent Document 1 has large swelling in hot water and large shrinkage in drying, having low dimensional stability and mechanical strength, and therefore is still insufficient in terms of heat resistance and durability, as a proton conductive membrane for the solid polymer fuel cells.

### [Means for Solving the Problem]

It is an object of the present invention to provide a polyarylene copolymer having a sulfonic acid group which has high proton conductivity and reduced swelling in hot water and reduced shrinkage in drying. It is another object of the present invention to provide a solid polymer electrolyte and a proton conductive membrane comprising the copolymer. It is further object of the present invention to provide a membrane-electrode assembly using these.

The present inventors studied diligently to solve the aforementioned problems and have found that the above objects are achieved with a polyarylene that comprises specific structural units. The present invention has been completed based on the finding.

Embodiments of the present invention are indicated in the following [1] to [10].
[1] A polyarylene block copolymer comprising a polymer segment (A) having a sulfonic acid group, and a polymer segment (B) having substantially no sulfonic acid group, the polymer segment (B) having substantially no sulfonic acid group comprising a structural unit represented by the following formula (1).

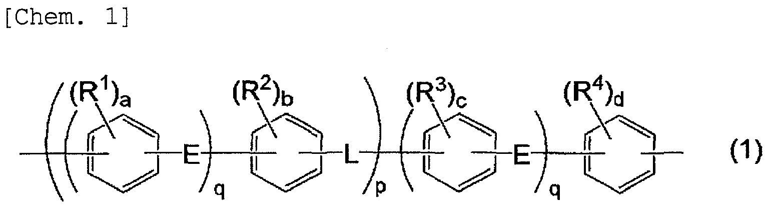

In the formula (1), R¹ to R⁴ are each independently a halogen atom, a hydrocarbon group having 1 to 20 carbon atoms, a halogenated hydrocarbon group having 1 to 20 carbon atoms, a nitro group, or a nitrile group; E are each independently a direct bond, -O-, -S-, -CO-, -SO₂-, -SO-, -CONH-, -COO-, -(CF₂)ᵢ- (i is an integer of from 1 to 10), -(CH₂)ⱼ- (j is an integer of from 1 to 10), -CR'₂- (R' is an aliphatic hydrocarbon group, an aromatic hydrocarbon group, or a halogenated hydrocarbon group), a cyclohexylidene group, or a fluorenylidene group;
L is selected from a structural unit represented by the following formula (1-1), a structural unit represented by the following formula (1-2), and a structural unit represented by the following formula (1-3);
at least one of L is a structural unit represented by the following formula (1-1), or a structural unit represented by the following formula (1-2);
a to d are each independently an integer of from 0 to 4; p is an integer of from 1 to 200, q are each independently an integer of from 0 to 4. Of single lines at ends of the structural unit, a single line one side of which does not show a substituent represents a bond with a neighboring structural unit.

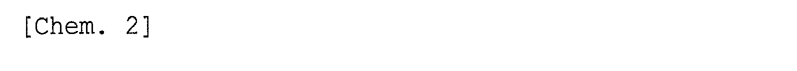

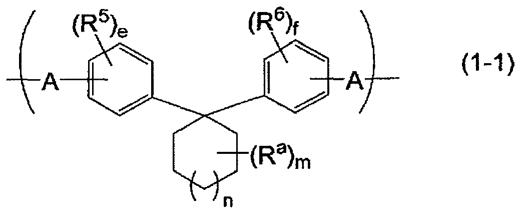

In the formula (1-1), A are each independently -O- or -S-; R⁵ and R⁶ are each independently a halogen atom, a hydrocarbon group having 1 to 20 carbon atoms, or a halogenated hydrocarbon group having 1 to 20 carbon atoms; R^{a} are each independently a hydrocarbon group having 1 to 20 carbon atoms, or a halogenated hydrocarbon group having 1 to 20 carbon atoms; e and f are an integer of from 0 to 4; m is an integer of from 0 to 14; and n is an integer of from 0 to 10.

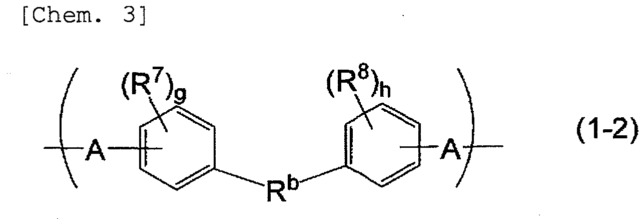

In the formula (1-2), A are each independently -O- or -S-; R⁷ and R⁸ are each independently a halogen atom, a hydrocarbon group having 1 to 20 carbon atoms, or a halogenated hydrocarbon group having 1 to 20 carbon atoms; R^{b} are each independently a divalent polycyclic alicyclic hydrocarbon group having 7 to 20 carbon atoms; and g and h are an integer of from 0 to 4.

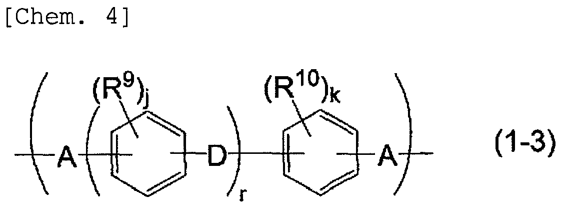

In the formula (1-3), A are each independently -O- or -S-; D is a direct bond, -O-, -S-, -CO-, -SO₂-, -SO-, -CONH-, -COO-, - (CF₂)ₖ- (k is an integer of from 1 to 10), -(CH₂)ₗ- (1 is an integer of from 1 to 10), -CR'₂- (R' is an aliphatic hydrocarbon group, an aromatic hydrocarbon group, or a halogenated hydrocarbon group), a cyclohexylidene group, or a fluorenylidene group; R⁹ and R¹⁰ are each independently a halogen atom, a hydrocarbon group having 1 to 20 carbon atoms, or a halogenated hydrocarbon group having 1 to 20 carbon atoms; j and k are an integer of from 0 to 4; and r is an integer of from 0 to 4.

Of single lines at ends of the structural units (1-1) to (1-3), a single line one side of which does not show a substituent represents a bond with a neighboring structural unit.

[2] The polyarylene block copolymer of [1], wherein the number average molecular weight in terms of polystyrene of a precursor for introducing the polymer segment (B) having no sulfonic acid group is 1,000 to 50,000.

[3] The polyarylene block copolymer of [1] or [2], wherein in the formula (1), p is 2 to 150.

[4] The polyarylene block copolymer of any one of [1] to [3], which comprises the structural unit represented by the formula (1-1) and the structural unit represented by the formula (1-2) in a molar ratio of 100:0 to 50:50.

[5] The polyarylene block copolymer of any one of [1] to [4], wherein the polymer segment (A) having a sulfonic acid group comprises a structural unit represented by the following formula (4).

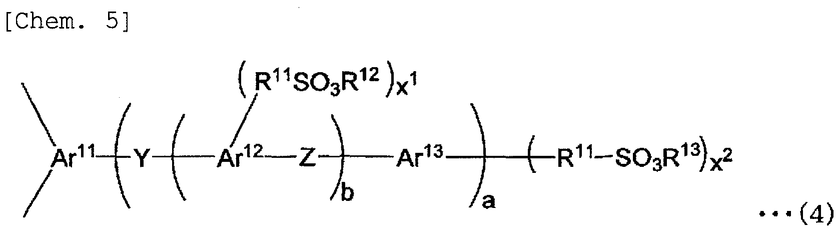

In the formula, Ar¹¹, Ar¹², and Ar¹³ are each independently a divalent group having at least one structure selected from the group consisting of a benzene ring, a condensed aromatic ring, and a nitrogen-containing heterocyclic ring each of which may be substituted with a fluorine atom; Y is -CO-, -SO₂-, -SO-, -CONH-, -COO-, -(CF₂)ᵤ- (u is an integer of from 1 to 10), -C(CF₃)₂-, or a direct bond; Z is -O-, -S-, a direct bond, -CO-, -SO₂-, -SO-, -(CH₂)ₗ- (1 is an integer of from 1 to 10), or -C(CH₃)₂-; R¹¹ is a direct bond, -O(CH₂)ₚ-, -O(CF₂)ₚ-, -(CH₂)ₚ-, or -(CF₂)ₚ-(p is an integer of from 1 to 12); R¹² and R¹³ are each independently a hydrogen atom, an alkali metal atom, an aliphatic hydrocarbon group, an alicyclic group, or a heterocyclic ring containing oxygen, provided that at least one of all R¹² and R¹³ contained in the formula is a hydrogen atom; x¹ is an integer of from 0 to 4; x² is an integer of from 1 to 5; a is an integer of from 0 to 1; and b is an integer of from 0 to 3. Of single lines at ends of the structural unit, a single line one side of which does not show a substituent represents a bond with a neighboring structural unit.

[6] A polymer electrolyte comprising the polyarylene block copolymer of any one of [1] to [5].
[7] A membrane-electrode assembly for a solid polymer fuel cell, wherein at least one of an anode electrode and a cathode electrode comprises the polymer electrolyte of [6].

[8] A proton conductive membrane comprising the polyarylene block copolymer of any one of [1] to [5].
[9] A membrane-electrode assembly for a solid polymer fuel cell, wherein an anode electrode and a cathode electrode are provided on one side and the other side of the proton conductive membrane of [8].
[10] A compound represented by the following formula (1-4).

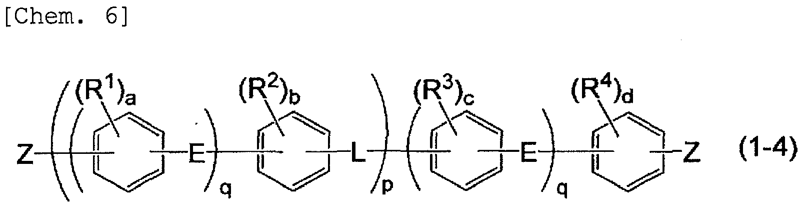

In the formula (1-4), R¹ to R⁴ are each independently a halogen atom, a hydrocarbon group having 1 to 20 carbon atoms, a halogenated hydrocarbon group having 1 to 20 carbon atoms, a nitro group, or a nitrile group; E are each independently a direct bond, -O-, -S-, -CO-, -SO₂-, -SO-, -CONH-, -COO-, -(CF₂)ᵢ- (i is an integer of from 1 to 10), -(CH₂)ⱼ- (j is an integer of from 1 to 10), -CR'₂- (R' is an aliphatic hydrocarbon group, an aromatic hydrocarbon group, or a halogenated hydrocarbon group), a cyclohexylidene group, or a fluorenylidene group;
L is a structural unit represented by the formula (1-1), a structural unit represented by the formula (1-2), or a structural unit represented by the formula (1-3); at least one of L is a structural unit represented by the formula (1-1), or a structural unit represented by the formula (1-2);
a to d are each independently an integer of from 0 to 4; p is an integer of from 1 to 200; q are each independently an integer of from 0 to 4; and Z is an atom or a group selected from a halogen atom, -SO₂CH₃, -SO₂CF₃, and -NO₂.

### [Effect of the Invention]

The polyarylene block copolymer having a sulfonic acid group according to the present invention comprises specific structural units, and has reduced swelling in hot water and reduced shrinkage in drying. Consequently, the introduction of the sulfonic acid group at a high concentration is made possible, and there can be obtained a solid polymer electrolyte and a proton conductive membrane having high proton conductivity.

Furthermore, because of reduced swelling in hot water and reduced shrinkage in drying, there can be obtained the proton conductive membrane for a fuel cell comprising the polyarylene block copolymer having a sulfonic acid group according to the present invention.

### Embodiments for Carrying out the Invention

Hereinafter, a polyarylene block copolymer, a solid polymer electrolyte, and a proton conductive membrane according to the present invention will be described in detail.

### [Polyarylene Block Copolymer]

The polyarylene block copolymer of the present invention comprises a polymer segment (A) having a sulfonic acid group and a polymer segment (B) having substantially no sulfonic acid group.

### [Polymer Segment Having Substantially No Sulfonic Acid Group]

The polymer segment (B) having substantially no sulfonic acid group comprises a structural unit represented by the following formula (1).

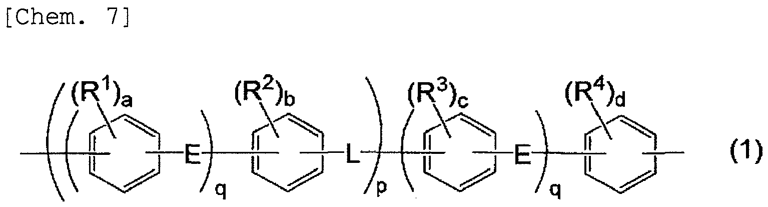

In the formula (1), R¹ to R⁴ are each independently a halogen atom, a hydrocarbon group having 1 to 20 carbon atoms, a halogenated hydrocarbon group having 1 to 20 carbon atoms, a nitro group, or a nitrile group; E are each independently a direct bond, -O-, -S-, -CO-, -SO₂-, -SO-, -CONH-, -COO-, -(CF₂)ᵢ- (i is an integer of from 1 to 10), -(CH₂)ⱼ- (j is an integer of from 1 to 10), -CR'₂- (R' is an aliphatic hydrocarbon group, an aromatic hydrocarbon group, or a halogenated hydrocarbon group), a cyclohexylidene group, or a fluorenylidene group; L is a structural unit represented by the following formula (1-1), or a structural unit represented by the following formula (1-2); at least one of plural L is the structural unit represented by the following formula (1-1) ; a to d are each independently an integer of from 0 to 4; p is an integer of from 1 to 200; and q is an integer of from 0 to 4.

Of single lines at ends of the structural unit, a single line one side of which does not show a substituent represents a bond with a neighboring structural unit.
When p is 1, L is the structural unit represented by the following formula (1-1), or the structural unit represented by the following formula (1-2).
When p is 2 or more, L are selected from the structural unit represented by the following formula (1-1), the structural unit represented by the following formula (1-2), and the structural unit represented by the following formula (1-3), and at least one of plural L is the structural unit represented by the following formula (1-1), or the structural unit represented by the following formula (1-2).

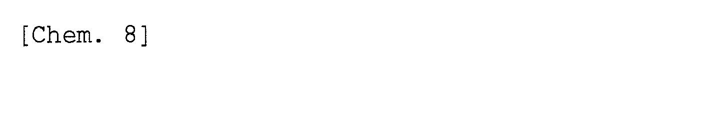

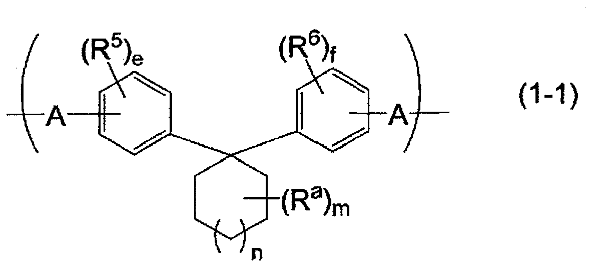

In the formula (1-1), A are each independently -O- or -S-; R⁵ and R⁶ are each independently a halogen atom, a hydrocarbon group having 1 to 20 carbon atoms, or a halogenated hydrocarbon group having 1 to 20 carbon atoms; R^{a} are each independently a hydrocarbon group having 1 to 20 carbon atoms, or a halogenated hydrocarbon group having 1 to 20 carbon atoms; e and f are an integer of from 0 to 4; m is an integer of from 0 to 14; and n is an integer of from 0 to 10.

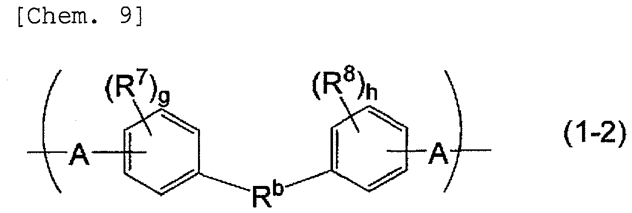

In the formula (1-2), A are each independently -O- or -S-; R⁷ and R⁸ are each independently a halogen atom, a hydrocarbon group having 1 to 20 carbon atoms, or a halogenated hydrocarbon group having 1 to 20 carbon atoms; R^{b} are each independently a divalent polycyclic alicyclic hydrocarbon group having 7 to 20 carbon atoms; and g and h are an integer of from 0 to 4.

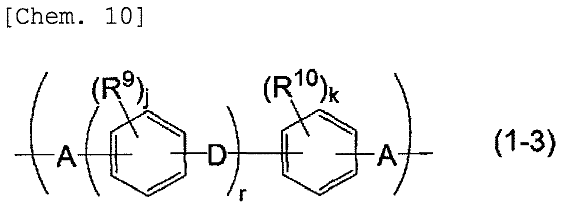

In the formula (1-3), A are each independently -O- or -S-; D is a direct bond, -O-, -S-, -CO-, -SO₂- -SO-, -CONH-, -COO-, -(CF₂)ₖ- (k is an integer of from 1 to 10), -(CH₂)ₗ- (1 is an integer of from 1 to 10), -CR'₂- (R' is an aliphatic hydrocarbon group, an aromatic hydrocarbon group, or a halogenated hydrocarbon group), a cyclohexylidene group, or a fluorenylidene group; R⁹ and R¹⁰ are each independently a halogen atom, a hydrocarbon group having 1 to 20 carbon atoms, or a halogenated hydrocarbon group having 1 to 20 carbon atoms; j and k are an integer of from 0 to 4; and r is an integer of from 0 to 4.
Of single lines at ends of the structural units (1-1) to (1-3), a single line one side of which does not show a substituent represents a bond with a neighboring structural unit.

Examples of a monovalent hydrocarbon group having 1 to 20 carbon atoms in the above R¹ to R⁹ and R^{a} include an alkyl group having 1 to 20 carbon atoms such as a methyl group, an ethyl group, a propyl group, an isopropyl group, a butyl group, an isobuyl group, a t-butyl group, a pentyl group, and a hexyl group; a cycloalkyl group having 3 to 20 carbon atoms such as a cyclopentyl group, and a cyclohexyl group; an aromatic hydrocarbon group having 6 to 20 carbon atoms such as a phenyl group, a naphtyl group, and a biphenyl group; and an alkenyl group having 2 to 20 carbon atoms such as a vinyl group, and allyl group.

Examples of the monovalent halogenated hydrocarbon group having 1 to 20 carbon atoms in the above R¹ to R⁹ and R^{a} include a halogenated alkyl group having 1 to 20 carbon atoms, a halogenated cycloalkyl group having 3 to 20 carbon atoms, and a halogenated aromatic hydrocarbon group having 6 to 20 carbon atoms. Examples of the halogenated alkyl group include a trichloromethyl group, a trifluoromethyl group, a tribromomethyl group, a pentachloroethyl group, a pentafluoroethyl group, and a pentabromoethyl group. Examples of the halogenated aromatic hydrocarbon group include a chlorophenyl group, and a chloronaphthyl group.

Examples of R^{b} include a divalent group derived from a polycyclic aliphatic hydrocarbon such as norbornene, norbornane, adamantane, tricyclo[5, 2, 1, 0 (2, 6)]decane, tricyclo[5,2,1,0(2,6)]heptane, pinane, camphane, decalin, nortricyclane, perhydroanthracene, perhydroazulene, cyclopentanohydrophenanthrene, bicyclo[2.2.2]-2-octene,and cubane. Of these, norbornene, adamantane, and tricyclo[5, 2, 1, 0 (2, 6)]decane are preferable.

a, b, c, d, e, f, g, h, j, and k are preferably 0 or 1. Further, it is preferable that a or b, and d is 1, and any of R¹, R² and R⁴ contains -CN.

m is preferably 1 to 10, more preferably 1 to 5. When m is 2 or more, the binding site of R^{a} is not particularly limited, and thus may be bonded to the same carbon, or may be bonded to a different carbon atom.

When m is 0, n is preferably 1 to 10, more preferably 2 to 10, more preferably 3 to 8.
n is preferably 1 or 2, more preferably 1.

A is preferably -O-.
p is preferably 2 to 150, more preferably 3 to 125, further preferably 5 to 100.

A plurality of q may be the same as or different from each other, and q is preferably 0 to 2, more preferably 0 or 1, and it is further preferable that one of q is 0 and the other of q is 1.

Of single lines at ends of the structural units, a single line one side of which does not show a substituent represents a bond with a neighboring structural unit.
r is preferably 0 to 2, more preferably 0 or 1.

The structural unit represented by the formula (1-1) and the structural unit represented by the formula (1-2) are contained preferably in a molar ratio of 100:0 to 50:50, more preferably in a molar ratio of 100:0 to 75:25.

Specific examples of the structural unit represented by the general formula (1-1) are as follows.

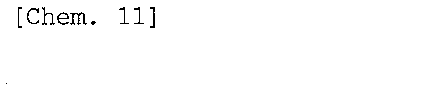

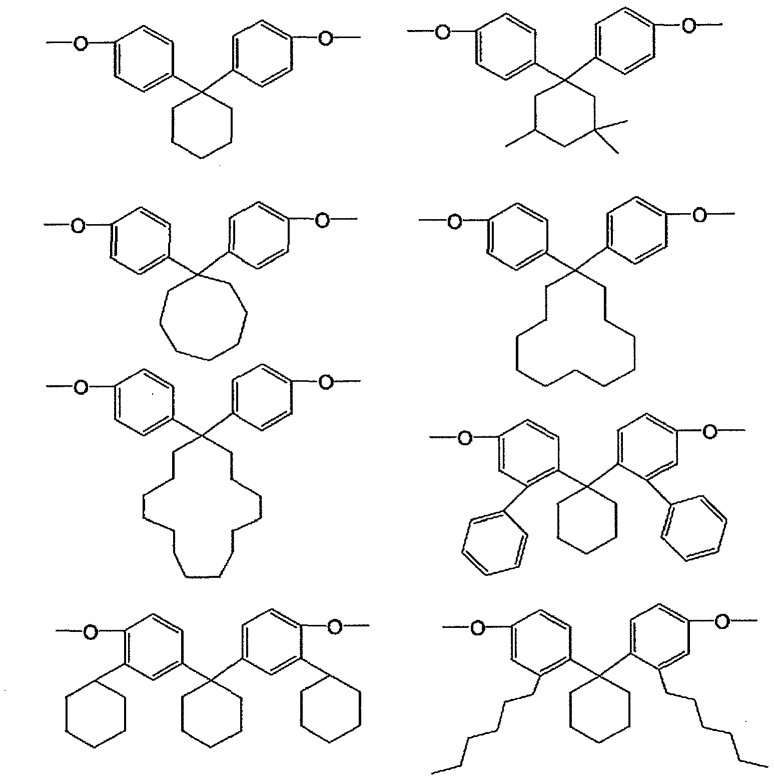

Specific examples of the structural unit represented by the general formula (1-2) are as follows.

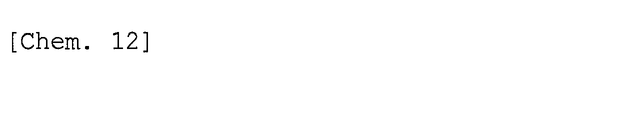

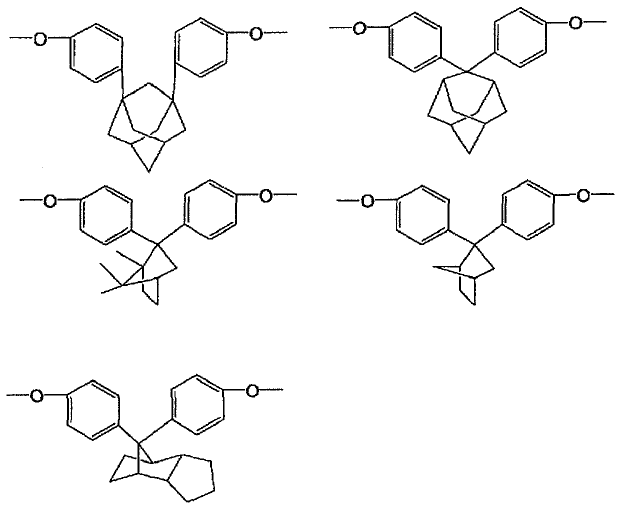

Specific examples of the structural unit represented by the general formula (1-3) are as follows.

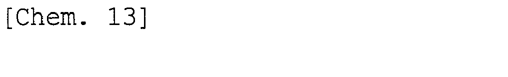

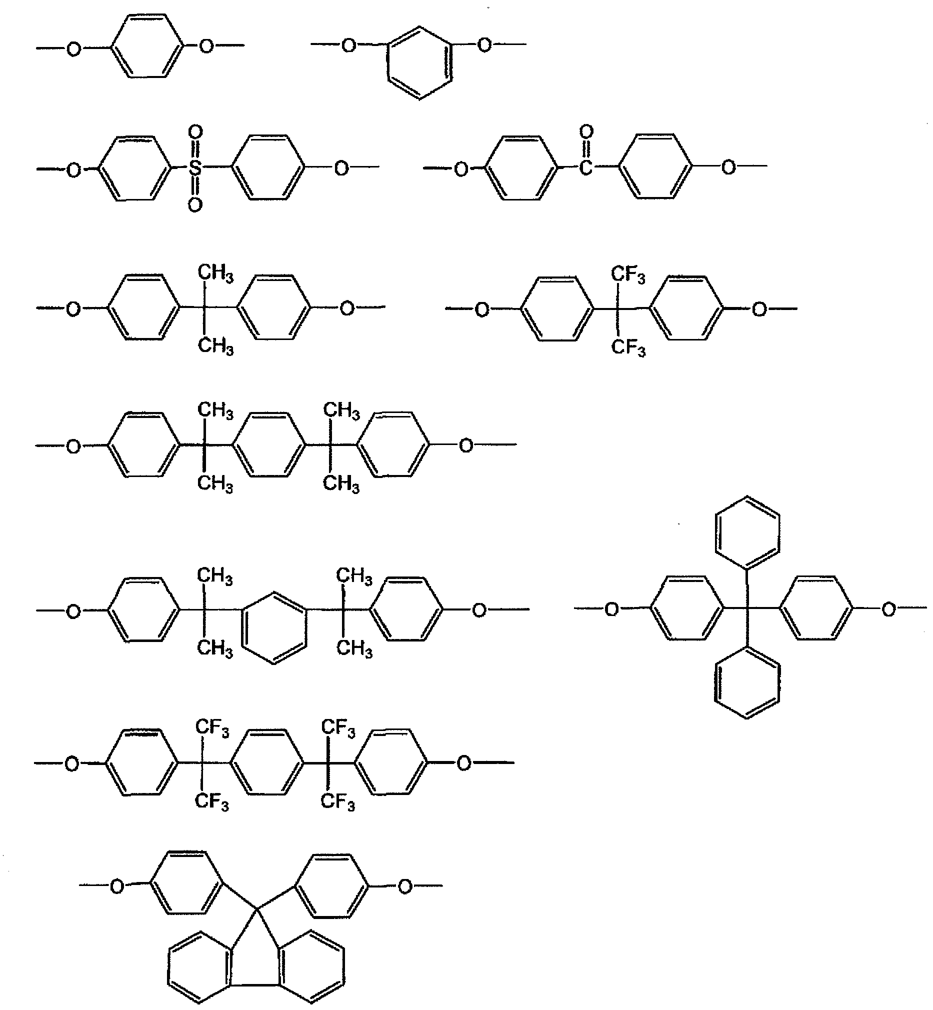

The number average molecular weight in terms of polystyrene of a precursor for introducing the polymer segment (B) having substantially no sulfonic acid group is 1,000 to 50,000, more preferably 2, 000 to 30, 000, still more preferably 3,000 to 20, 000.

The inclusion of the polymer segment (B) more reduces the swelling in hot water and shrinkage in drying, and can lower the viscosity of a polymer solution used in the preparation of a membrane, and thereby a membrane with more uniformity can be produced with good productivity.

### [Structural Unit Having Sulfonic Acid Group]

The polymer segment (A) having a sulfonic acid group, although not limited particularly, preferably comprises a structural unit represented by the following formula (3).

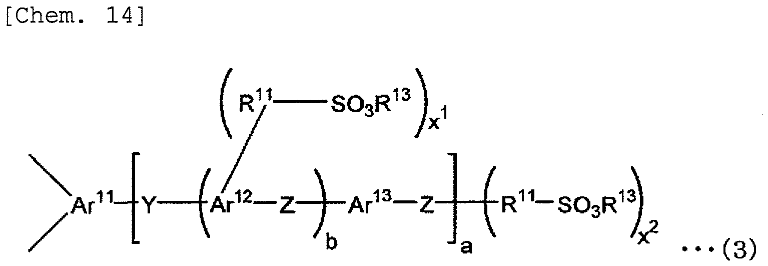

In the formula (3), Ar¹¹, Ar¹² and Ar¹³ are each independently at least one structure selected from the group consisting of a benzene ring, a condensed aromatic ring, and a nitrogen-containing heterocyclic ring each of which may be substituted with a fluorine atom.

Y is -CO-, -CONH-, -COO-, -SO₂-, -SO-, -(CF₂)ᵤ- (u is an integer of from 1 to 10), -C(CF₃)₂-, or a direct bond.
Z is -O-, -S-, a direct bond, -CO-, -SO₂- -SO-, -(CH₂)ₗ-(1 is an integer of from 1 to 10), or C(CH₃)₂-.

R¹¹ is a direct bond, -O(CH₂)ₚ, -O(CF₂)ₚ-, -(CH₂)ₚ-, or (CF₂)ₚ-(p is an integer of from 1 to 12).
R¹² and R¹³ are each independently a hydrogen atom, an alkali metal atom, or an aliphatic hydrocarbon group, provided that at least one of all R¹² and R¹³ contained in the formula is a hydrogen atom.

x¹ is an integer of from 0 to 4; x² is an integer of from 1 to 5; a is an integer of from 0 to 1; and b is an integer of from 0 to 3.
Of single lines at ends of the structural unit, a single line one side of which does not show a substituent represents a bond with a neighboring structural unit.

The structural unit having a sulfonic acid group preferably comprises a repeating unit represented by the following formula (3-1).

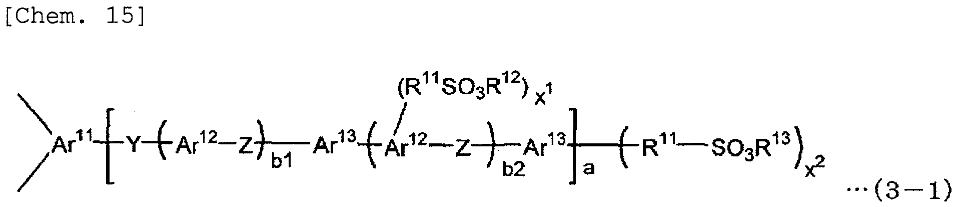

In the above formula, Ar¹¹, Ar¹² and Ar¹³ are each independently at least one structure selected from the group consisting of an aromatic ring such as a benzene ring and a naphthalene ring, and a nitrogen-containing heterocyclic ring each of which may be substituted with a fluorine atom.

Y is at least one structure selected from the group consisting of -CO-, -CONH-, -COO-, -SO₂-, -SO-, -(CF₂)ᵤ- (u is an integer of from 1 to 10), -C(CF₃)₂-, and a direct bond.

Z is at least one structure selected from the group consisting of -O-, -S-, a direct bond, -CO-, -SO₂-, -SO-, -(CH₂)ₗ-(1 is an integer of from 1 to 10), and -C(CH₃)₂-.

R¹¹ is at least one structure selected from the group consisting of a direct bond, -O(CH₂)ₚ, -O(CF₂)ₚ-, -(CH₂)ₚ-, and -(CF₂)ₚ- (p is an integer of from 1 to 12).

R¹² and R¹³ are each independently at least one structure selected from the group consisting of a hydrogen atom, an alkali metal atom, and an aliphatic hydrocarbon group, provided that at least one of all R¹² and R¹³ contained in the above formula is a hydrogen atom.

x¹ is an integer of from 0 to 4; x² is an integer of from 1 to 5; a is an integer of from 0 to 1; and b1 and b2 are each an integer of from 0 to 3.
The repeating unit represented by the formula (3) or the formula (3-1) is preferably a structure represented by the following formula (3-2).

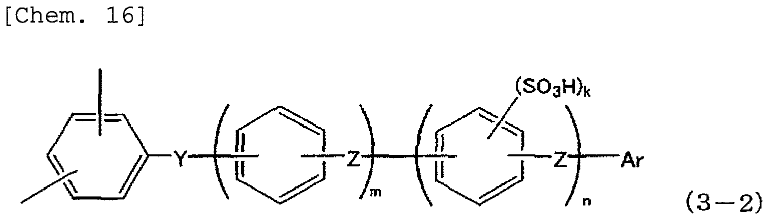

In the formula (3-2), Y is at least one structure selected from the group consisting of -CO-, -SO₂- -SO-, a direct bond, -(CF₂)ᵤ- (u is an integer of from 1 to 10), and -C(CF₃)₂-.

Z is at least one structure selected from the group consisting of a direct bond, -(CH₂)ₗ- (1 is an integer of from 1 to 10), -C(CH₃)₂-, -O-, -S-, -CO-, and -SO₂-. Ar is an aromatic group having a substituent represented by -SO₃H, -O(CH₂)ₚSO₃H or -O(CF₂)ₚSO₃H. p is an integer of from 1 to 12, m is an integer of from 0 to 3, n is an integer of from 0 to 3, and k is an integer of from 1 to 4. Of single lines at ends of the structural unit, a single line one side of which does not show a substituent represents a bond with a neighboring structural unit. When m and n are each 2 or more, plural Z and k may be the same or different, respectively, and a binding position is not particularly limited. Examples of the aromatic group include a phenyl group and a naphthyl group.

Specific structures of the structural unit having a sulfonic acid group are, for example, as follows.

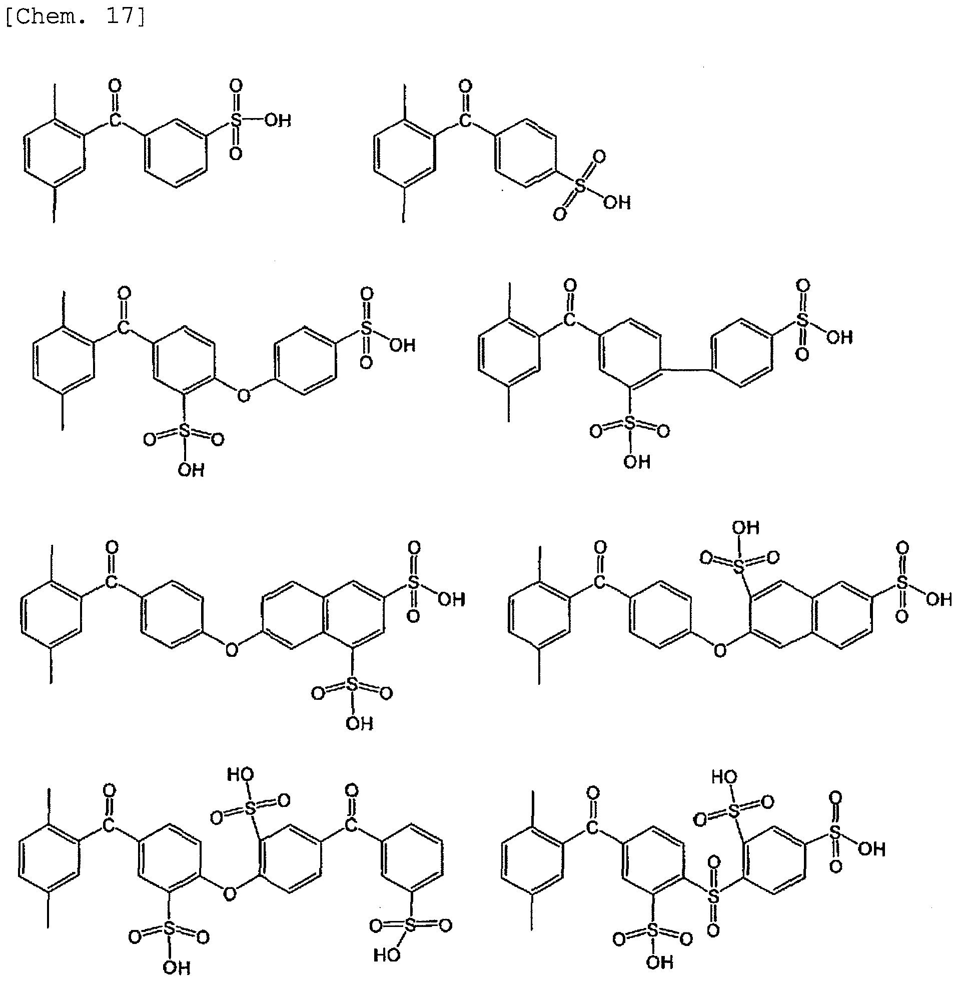

In the present invention, the structural unit may have a phosphonic acid instead of the sulfonic acid or together with the sulfonic acid.

### [Structural Unit Having Nitrogen-Containing Heterocyclic Group]

In the present invention, together with the structural units represented by the formulae (1) and (3), a structural unit having a nitrogen-containing heterocyclic group represented by the following formula (4-1) may be contained.

-(R^{s})ₑ-(V-R^{h})_{f} (4-1)

In the formula, V is not particularly limited as long as being a divalent organic group, but is preferably at least one structure selected from the group consisting of -O-, -S-, a direct bond, -CO-, -SO₂- and -SO-.

R^{s} is a direct bond, or a given divalent organic group which is not particularly limited. The divalent organic group is any of the hydrocarbon group having 1 to 20 carbon atoms, with specific examples including an alkylene group such as a methylene group, and an ethylene group, an aromatic ring such as a phenylene group, a condensed aromatic ring, and a nitrogen-containing heterocylic ring. R^{s} may be a group represented by -W-Ar⁹-.

Of single lines at ends of the structural unit, a single line one side of which does not show a substituent represents a bond with a neighboring structural unit.
In the above formula, Ar⁹ is a divalent group having at least one structure selected from the group consisting of a benzene ring, a condensed aromatic ring, and a nitrogen-containing heterocyclic ring each of which may be substituted with a fluorine atom.

W is at least one structure selected from the group consisting of -CO-, -SO₂-, -SO-, -(CF₂)ᵤ- (u is an integer of from 1 to 10), -C(CF₃)₂-, and a direct bond. e is an integer of from 0 to 4, and f is integer of from 1 to 5.

The aromatic ring of the main chain and the electron withdrawing group V are preferably directly bonded to each other in terms of safety, but may be bonded to each other via a divalent group, i.e., R^{s}, as long as the effect of the present invention is not impaired.

Specific examples of the structure having a nitrogen-containing group represented by the formula (4-1) include structures represented by the following formulae (4-2).

-V-R^{h} (4-2a)

-R^{s}-V-R^{h} (4-2b)

In the above formula, Ar⁹ is a divalent group having at least one structure selected from the group consisting of a benzene ring and a condensed aromatic ring, and a nitrogen-containing heterocyclic ring each of which may be substituted with a fluorine atom.

e is an integer of from 0 to 4, and f is an integer of from 1 to 5. W is at least one structure selected from the group consisting of -CO-, -SO₂-, -SO-, -(CF₂)ᵤ- (u is an integer of from 1 to 10), -C(CF₃)₂-, and a direct bond.

R^{h} is a nitrogen-containing heterocyclic ring, with examples including a nitrogen-containing five-membered ring or six-membered ring structure. The number of the nitrogen atoms in the heterocyclic ring is not particularly limited as long as being one or more. The heterocyclic ring may contain oxygen or sulfur in addition to nitrogen.

The nitrogen-containing heterocyclic group, constituting R^{h}, is a group formed by abstracting a hydrogen atom bonded to carbon or nitrogen from a nitrogen-containing heterocyclic compound or a derivative thereof, wherein the nitrogen-containing heterocyclic compound includes pyrrole, thiazole, isothiazole, oxazole, isoxazole, pyridine, imidazole, imidazoline, pyrazole, 1,3,5-triazine, pyrimidine, pyridazine, pyrazine, indole, quinoline, isoquinoline, purine, benzimidazole, benzoxazole, benzothiazole, tetrazole, tetrazine, triazole, carbazole, acridine, quinoxaline and quinazoline.

The nitrogen-containing heterocyclic groups thereof may have substituents. Examples of the substituents include alkyl groups such as a methyl group, an ethyl group, and a propyl group, aryl groups such as a phenyl group, a tolyl group, and a naphthyl group, a cyano group and a fluorine atom.

The structural unit having a nitrogen-containing heterocyclic group, contained in the copolymer of the present invention, is represented by the following formula (5).

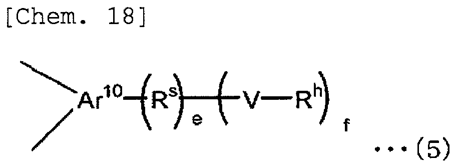

In the formula (5), Ar¹⁰ is a divalent group having at least one structure selected from the group consisting of a benzene ring, a condensed aromatic ring, and a nitrogen-containing heterocyclic ring. In Ar¹⁰, a part of or all of the hydrogen atoms may be substituted with at least one atom or group selected from the group consisting of a fluorine atom, a nitro group, and a nitrile group; or a part of or all of the hydrogen atoms may be substituted with at least one atom or group selected from the group consisting of an alkyl group, an allyl group, and an aryl group each of which may be substituted with fluorine.

In the formula (5), V, e, f, R^{s}, and R^{h} are defined in the same way as in the formulae (4-1) and (4-2).
The structure having the nitrogen-containing heterocyclic group preferably has a structure represented by the following formula (6), in the polyarylene block copolymer of the present invention.

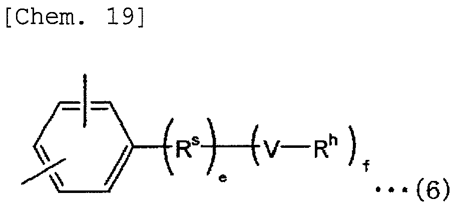

In the formula (6), V, R^{s}, and R^{h} are defined in the same way as in the formula (5). Of single lines at ends of the structural unit, a single line one side of which does not show a substituent represents a bond with a neighboring structural unit.

In the formula (6), the nitrogen-containing heterocyclic group R^{h} is preferably a pyridine ring. The pyridine ring, among the nitrogen-containing heterocyclic rings, originally has a lower basicity of N, and thus shows a feature of improving the proton conductivity in low-humidity region.

In the formula (6), V is preferably -CO-, or -SO₂-. -CO-, if combined with the pyridine ring, easily forms a thermally stable structure as a result of stabilization due to conjugation. -SO₂-decreases electron density and more inhibits the basicity of nitrogen, which can increase proton conductivity particularly in low-humidity region.

e and f are defined in the same way as in the formulae (4-1) and (4-2).
By including the structural unit having a nitrogen-containing heterocyclic group as described above, a solid polymer electrolyte membrane is obtained which is provided with basicity and has highly stabilized sulfonic acid under high temperature without the proton conductivity being impaired.

The polyarylene block copolymer according to the present invention has its individual structural units determined in accordance with desired properties such as the ion exchange capacity and the molecular weight.
In order to have reduced swelling in hot water and shrinkage in drying, 1 mol of the total amounts of all the segments of the block copolymer of the present invention comprises the polymer segment (B) having substantially no sulfonic acid group in an amount of 0.001 to 0.9 mol, preferably 0.003 to 0.8 mol, more preferably 0.005 to 0.6 mol.

The inclusion of the polymer segment (B) enables the introduction of the sulfonic acid group at a high concentration. The amount of the polymer segment (A) having a sulfonic group is appropriately determined in accordance with the ion exchange capacity.

The structural unit having a nitrogen-containing heterocyclic group, if contained, is not particularly limited on its amount, but the structural unit having a nitrogen-containing heterocyclic group is desirably contained in amount of not more than 0.5 mol, preferably not more than 0.3 mol, more preferably not more than 0.1 mol, based on 1 mol of the total amounts of all the segments.

Moreover, as long as the object of the present invention is not impaired, other segments than the above may be contained. For example, a segment formed from a structural unit represented by the following formula may be contained.

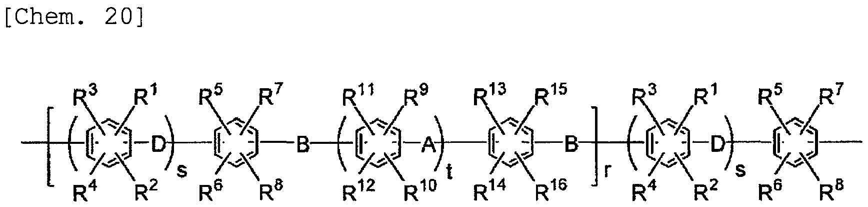

In the formula, A and D are independently at least one structure selected from the group consisting of a direct bond, -CO-, -SO₂- -SO-, -CONH-, -COO-, - (CF₂)ₗ- (1 is an integer of 1 to 10), -(CH₂)ₗ- (1 is an integer of 1 to 10), -CR'₂- (R' is an aliphatic hydrocarbon group, an aromatic hydrocarbon group, or a halogenated hydrocarbon group), a cyclohexylidene group, a fluorenylidene group, -O- and -S-; B are independently an oxygen atom, or a sulfur atom; R' to R¹⁶ may be the same as or different from each other, and are at least one atom or group selected from a hydrogen atom, a fluorine atom, an alkyl group, a partially halogenated or wholly halogenated alkyl group, an allyl group, an aryl group, and a nitro group; s and t are an integer of from 0 to 4; r is an integer of 0, or 1 or more. Of single lines at ends of the structural unit, a single line one side of which does not show a substituent represents a bond with a neighboring structural unit.

The molecular weight of the polymer of the present invention is 10,000 to 1,000,000, preferably 20,000 to 800,000, more preferably 50,000 to 300,000, as the weight average molecular weight in terms of polystyrene determined by gel permeation chromatography (GPC).

The ion exchange capacity of the polymer according to the present invention is usually 0.3 to 6 meq/g, preferably 0.5 to 4 meq/g, and more preferably 0.8 to 3.5 meq/g. When the ion exchange capacity is within the above range, proton conductivity is high and power generation performance is high, and furthermore, sufficiently high water resistance is obtained.

The above ion exchange capacity can be adjusted by varying the types, usage ratios and combination of the individual structural units. Thus, such adjustments can be made during polymerization by varying the ratios of charging amounts and the types of precursors (monomers and oligomers) for introducing the structural units.

In general, more amount of the structural unit having a sulfonic acid group or a phosphonic acid group increases the ion exchange capacity and proton conductivity, but tends to decrease water resistance. On the other hand, less amount of such a structural unit decreases the ion exchange capacity and increases water resistance, but tends to decrease proton conductivity. More amount of the phosphonic acid group tends to increase radical resistance.

### [Process for Producing Polyarylene Copolymer]

The polyarylene copolymer of the present invention can be produced by, for example, Method A1 or Method B1, shown below.

### (Method A1)

For example, similarly to a method disclosed in JP-A-2004-137444, the polymer may be synthesized by copolymerizing a compound (A) which will form the structural unit of the polymer segment having substantially no sulfonic acid, a sulfonate (B) which will form the structural unit of the polymer segment having a sulfonic acid, and optionally a compound (C) which will form the structural unit of the polymer segment having a nitrogen-containing group, and by converting the sulfonate group into the sulfonic acid group.
(Compound (A) which will form the structural unit of the polymer segment having substantially no sulfonic acid (hereinafter, also called a "compound (A)"))
The polymer segment having substantially no sulfonic acid is a polymerization material for the polyarylene copolymer, and can be introduced thereto by using a compound represented by the following formula (1-4).

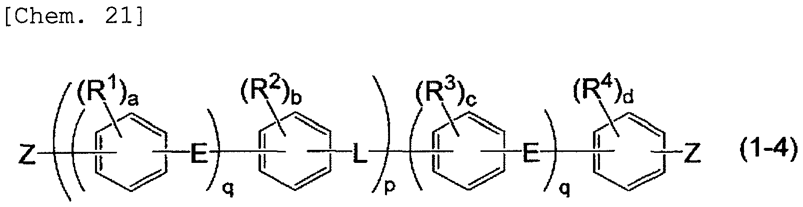

In the formula (1-4), R¹ to R⁴, L, a to d, p and q are defined in the same way as in the formula (1) ; and Z is an atom or a group selected from a halogen atom, a nitro group, -SO₂CH₃, and -SO₂CF₃.

The compound represented by the formula (1-4) can be produced through a reaction shown below, for example.
At first, bis(thio)phenols represented by the following formula (1-5) and/or the formula (1-6), and optionally bis(thio)phenols represented by the following formula (1-7) are converted into alkali metal salts.

At this time, the bisphenols are dissolved in a polar solvent of high dielectric constant such as N-methyl-2-pyrrolidone, N,N-dimethylacetamide, sulfolane, diphenylsulfone or dimethyl sulfoxide. Then, into the solution, alkali compounds such as an alkali metal, an alkali metal hydride, an alkali metal hydroxide and an alkali metal carbonate are added. The alkali compound is used in slight excess over the hydroxyl groups of the phenols, for example 1.1 to 2 times, preferably 1.2 to 1.5 times the equivalent weight of the hydroxyl groups. Here, it is preferable that the reaction is accelerated by using a solvent that forms an azeotropic mixture with water, such as benzene, toluene, xylene, chlorobenzene and anisole.

Subsequently, the alkali metal salts of the above bis(thio)phenols are reacted with dihalide compounds represented by the following formula (1-8).

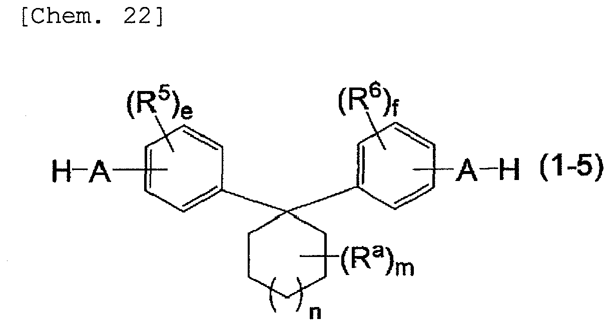

In the formula (1-5), R⁵, R⁶, A, e, f, m, and n are defined in the same way as in the formula (1-1).

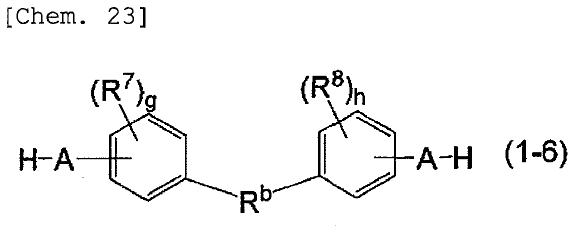

In the formula (1-6), R⁷, R⁸, A, g, h, and R^{b} are defined in the same way as in the formula (1-2).

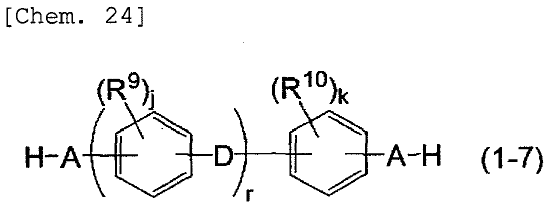

In the formula (1-7), R⁹, R¹⁰, A, D, j, and k are defined in the same way as in the formula (1-3).

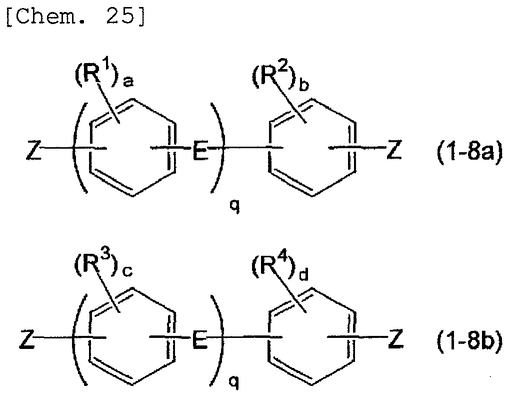

In the formula (1-8), R¹, R², a, b, E, and q are defined in the same way as in the formula (1); and Z is an atom or a group selected from a halogen atom, a nitro group, -SO₂CH₃, and -SO₂CF₃. The formulae (1-8a) and (1-8b) may be the same or different.

Preferable examples of the bis (thio) phenols represented by the formula (1-5) include
4,4'-(3,3,5-trimethylcyclohexylidene)bisphenol,
1,1-bis(4-hydroxyphenyl)cyclohexane (Bis-Z),
1,1-bis(4-hydroxyphenyl)-3,3,5-trimethylcyclohexane(BisP-TMC),
1,1-bis(4-hydroxyphenyl)cyclopentane,
1,1-bis(2-phenyl-4-hydroxyphenyl)cyclohexane,
1,1-bis(2-hexyl-4-hydroxyphenyl)cyclohexane,
1,1-(4-hydroxyphenyl)cyclododecane,
1,1-(4-hydroxyphenyl)cyclooctane,
1,1-(4-hydroxyphenyl)cyclopentadecane, and
1,1-bis(2-cyclohexyl-4-hydroxyphenyl)cyclohexane.
These bis(thio)phenols may be used singly or in combination or two or more kinds.

Examples of the bis (thio) phenols represented by the formula
(1-6) include 2,2'-(4-hydroxyphenyl)adamantane,
1,3-(4-hydroxyphenyl)adamantane,
2,2'-(4-hydroxyphenyl)norbornene, and
8,8'-(4-hydroxyphenyl)-tricyclo[5,2,1,0(2,6)]dacane.
Examples of the bis (thio) phenols represented by the formula (1-7) include
1,3-bis[1-methyl-1-(4-hydroxyphenyl)ethyl]benzene (Bis-M),
1,4-bis[1-methyl-1-(4-hydroxyphenyl)ethyl]benzene,
1,3-(4-hydroxybenzoylbenzene), 1,4-(4-hydroxybenzoylbenzene),
1,3-bis(4-hydroxyphenoxy)benzene,
1,4-bis(4-hydroxyphenoxy)benzene,
1,4-bis(4-hydroxyphenyl)benzene,
1,3-bis(4-hydroxyphenyl)benzene, 4,4'-isopropylidenebisphenol (Bis-A),
2,2-bis(4-hydroxyphenyl)-1,1,1,3,3,3-hexafluoropropane (Bis-AF), 4,4'-bishydroxybenzophenone,
4,4'-bishydroxydiphenylsulfone (4,4'-DHDS),
4,4'-dihydroxydiphenylether, 4,4'-dihydroxybiphenyl
(4,4'-DHBP), bis(4-hydroxyphenyl)methane, resorcinol (RES), hydroquinone (HQ), 9,9-bis(4-hydroxyphenyl)fluorene (BPFL),
9,9-bis(4-hydroxy-3-methylphenyl)fluorene (BCFL), and
4,4'-isopropylidenebis(2-phenylphenol). Of these,
1,3-bis[1-methyl-1-(4-hydroxyphenyl)ethyl]benzene (Bis-M),
1,4-bis[1-methyl-1-(4-hydroxyphenyl)ethyl]benzene,
2,2-bis(4-hydroxyphenyl)-1,1,1,3,3,3-hexafluoropropane (Bis-AF), resorcinol (RES), and
9,9-bis(4-hydroxyphenyl)fluorene (BPFL) are preferable. These bis(thio)phenols may be used singly or in combination or two or more kinds.

Examples of the dihalide compounds represented by the formula (1-8) include 4,4'-dichlorobenzophenone (4,4'-DCBP),
4,4'-difluorobenzophenone (4,4'-DFBP),
4-chloro-4'-fluorobenzophenone, 2-chloro-4'-fluorobenzophenone,
4,4'-dichlorodiphenylsulfone (4,4'-DCDS),
4,4'-difluorodiphenylsulfone (4,4'-DFDS),
2,6-dinitrobenzonitrile, 2,5-dinitrobenzonitrile,
2,4-dinitrobenzonitrile, 2,6-dichlorobenzonitrile (2,6-DCBN),
2,5-dichlorobenzonitrile (2,5-DCBN), 2,4-dichlorobenzonitrile
(2,4-DBN), 2,6-difluorobenzonitrile (2,6-DFBN),
2,5-difluorobenzonitrile (2,5-DFBN), and
2,4-difluorobenzonitrile (2,4-DFBN). These dihalide compounds may be used singly or in combination or two or more kinds.
(Sulfonate (B) which will form the structural unit of the polymer segment having a sulfonic acid (hereinafter, also called a "compound (B)"))
The compound (B) is a monomer having a sulfonic acid group, and is represented by the following formula (16).

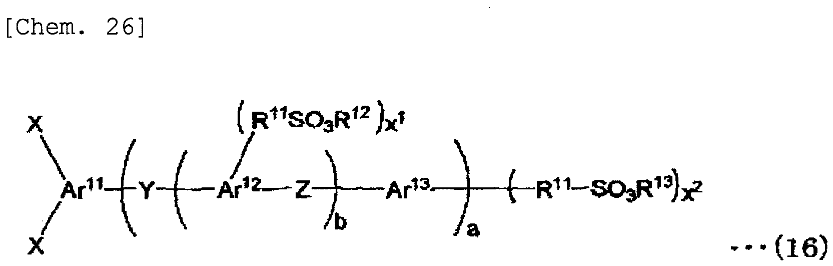

In the formula (16), Ar¹¹, Ar¹² and Ar¹³ may be the same or different, and are at least one structure selected from the group consisting of a benzene ring, a condensed aromatic ring, e.g., a naphthalene ring, and a nitrogen-containing heterocyclic ring each of which may be substituted with a fluorine atom.

X is at least one structure selected from the group consisting of chlorine, bromine, iodine, a methansulfonyl group, a trifluoromethanesulfonyl group, a benzenesulfonyl group, and a toluenesulfonyl group. Y is at least one structure selected from the group consisting of -CO-, -CONH-, -COO-, -SO₂-, -SO-, - (CF₂)ₗ- (1 is an integer of from 1 to 10), -C(CF₃)₂-, and a direct bond. Z is at least one structure selected from the group consisting of -O-, -S-, a direct bond, -CO-, -SO₂-, -SO-, - (CH₂)ₗ-(1 is an integer of from 1 to 10), and C(CH₃)₂-. R¹¹ is at least one structure selected from the group consisting of a direct bond, -O(CH₂)ₚ, -O(CF₂)ₚ-, -(CH₂)ₚ-, and -(CF₂)ₚ- (p is an integer of from 1 to 12).

R¹² and R¹³ are at least one structure selected from the group consisting of a hydrogen atom, an alkali metal atom, an aliphatic hydrocarbon group, an alicyclic hydrocarbon group, a hydrocarbon group containing a heterocyclic ring containing oxygen as a hetero atom.

x¹ is an integer of from 0 to 4; x² is an integer of from 1 to 5; a is an integer of from 0 to 1; and b is an integer of from 0 to 3.
When a is 2 or more, Y, Z, b, x¹, Ar¹², Ar¹³, R¹², and R¹³ in the parenthesis "a": ( )a may be the same or different, respectively.

The monomer represented by the formula (16) preferably comprises a structure represented by the following formula (17).

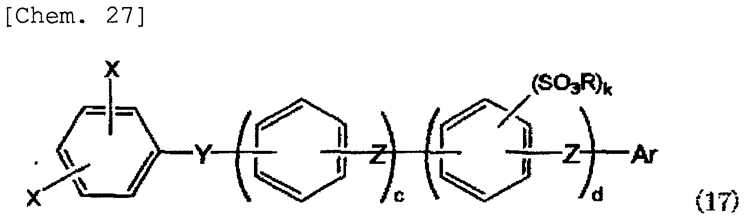

In the formula (17), X is an atom or a group selected from the group consisting of a chlorine atom, a bromine atom, and -OSO₂Rb (here, R^{b} is an alkyl group, a fluorine-substituted alkyl group, or an aryl group).

Y, Z, and k are defined in the same way as in the formula (16).
c is an integer of from 0 to 10, preferably from 0 to 2; d is an integer of from 0 to 10, preferably 0 to 2; and k is an integer of from 1 to 4. When c and d are each 2 or more, Z, R, and k contained in the parenthesis "c": ( )c and the parenthesis "d": ( )d may be the same or different, respectively.

Ar is an aromatic group having a substituent represented by -SO₃R, -O(CH₂)ₕSO₃, or -O(CF₂)ₕSO₃R (h is an integer of from 1 to 12). R is a branched or linear alkyl group, a cycloalkyl group, or a heterocyclic group containing oxygen as a hetero atom, with the number of carbon atoms being preferably 4 to 20. R may be partially substituted with a hydrogen atom.

Specific examples of the compound represented by the formula (17) include compounds represented by the following formulae, and sulfonates described in JP-A-2004-137444, JP-A-2004-345997, and JP-A-2004-346163.

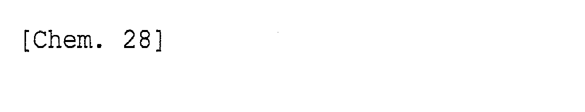

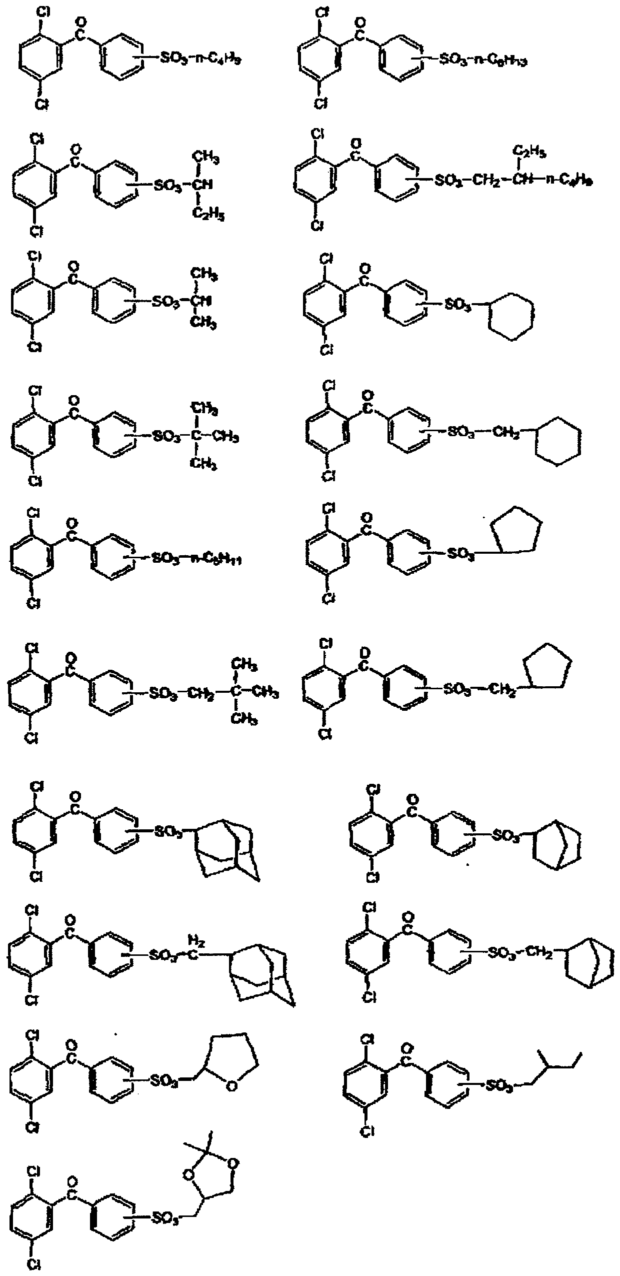

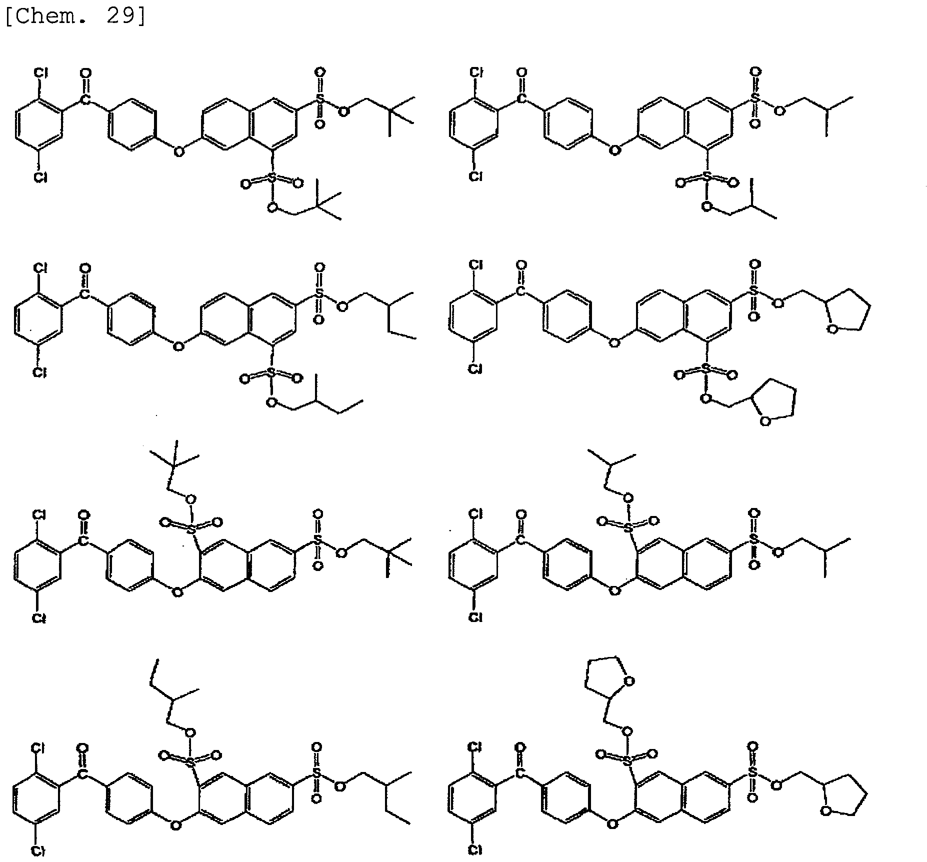

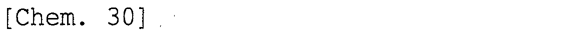

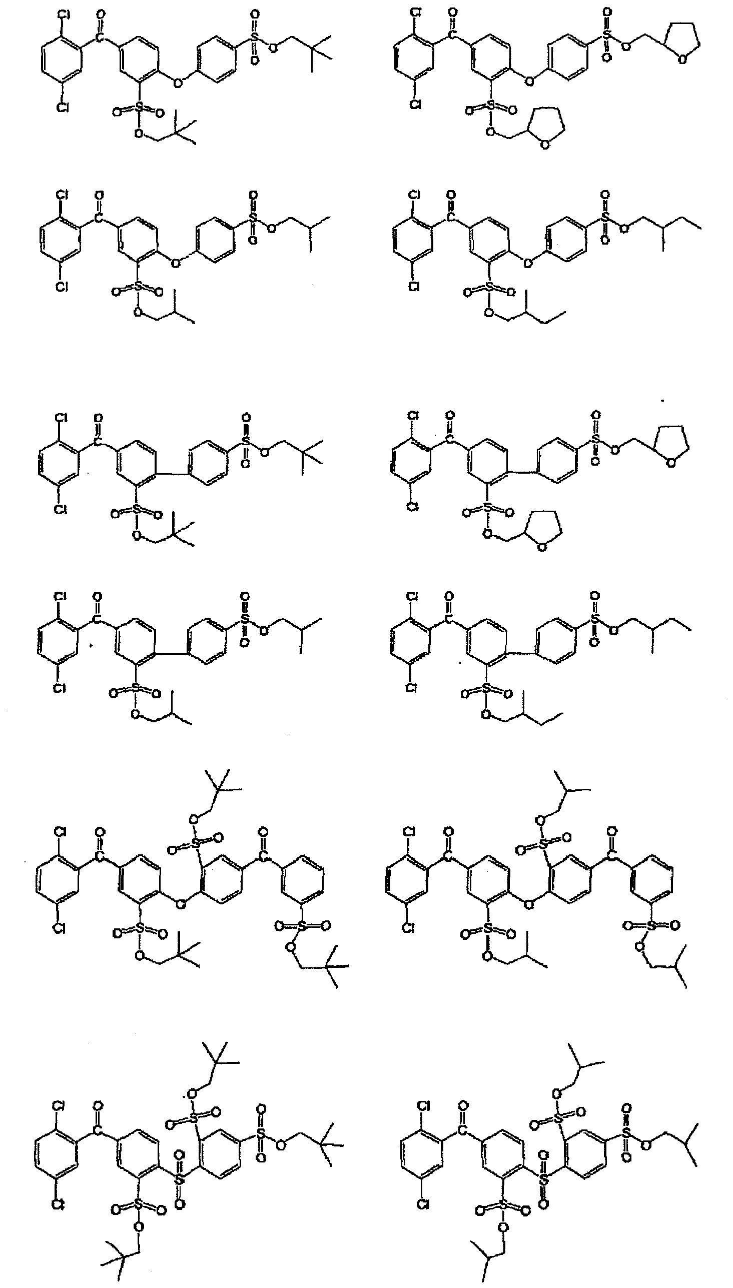

In the compounds represented by the formula (17), the sulfonate structure is usually bonded at a meta-position of the aromatic ring.
(Compound (C) which will form the structural unit having a nitrogen-containing heterocyclic group (hereinafter, also called a "compound (C)")
The compound (C) is a monomer having a nitrogen-containing heterocyclic structure, and is represented by the following formula (24).

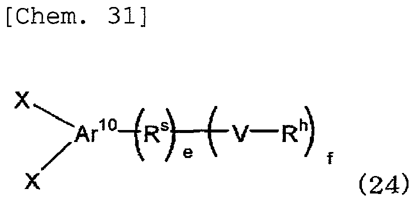

Ar¹⁰, V, e, f, R^{s}, and R^{h} are defined in the same way as in the formulae (4-1), (4-2a,b) and (5).

The above is specifically represented by the following formula (25).

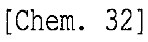

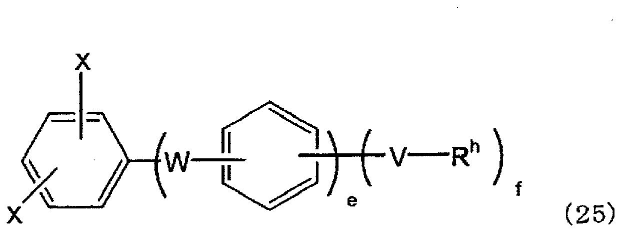

X, W, V, R₂₁, e, and f are defined in the same way as in the formulae (4-1), (4-2), and (5).

Specific examples of the compound (C) include the following compounds.

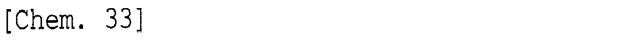

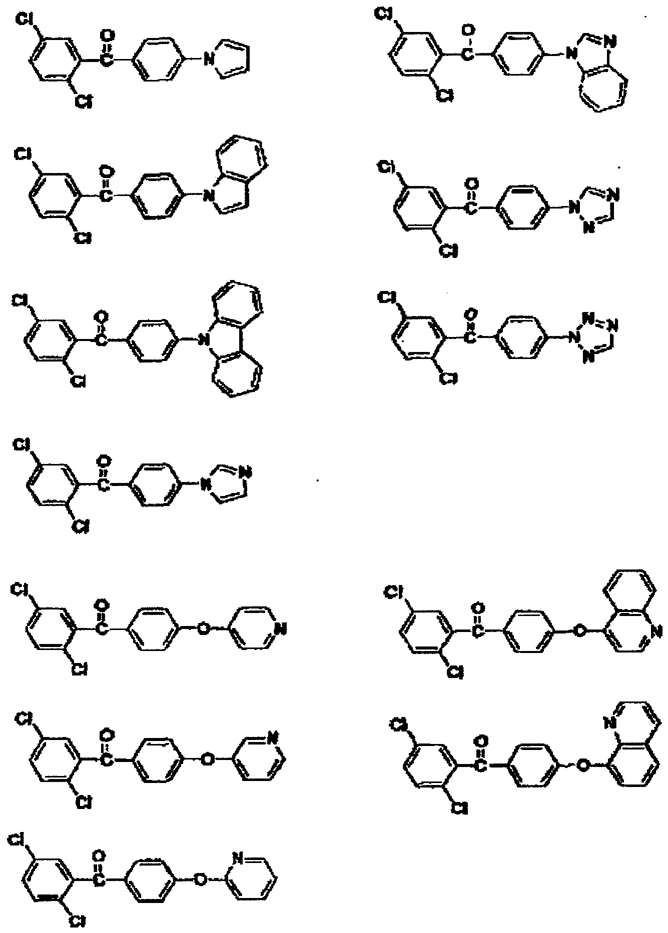

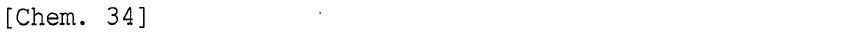

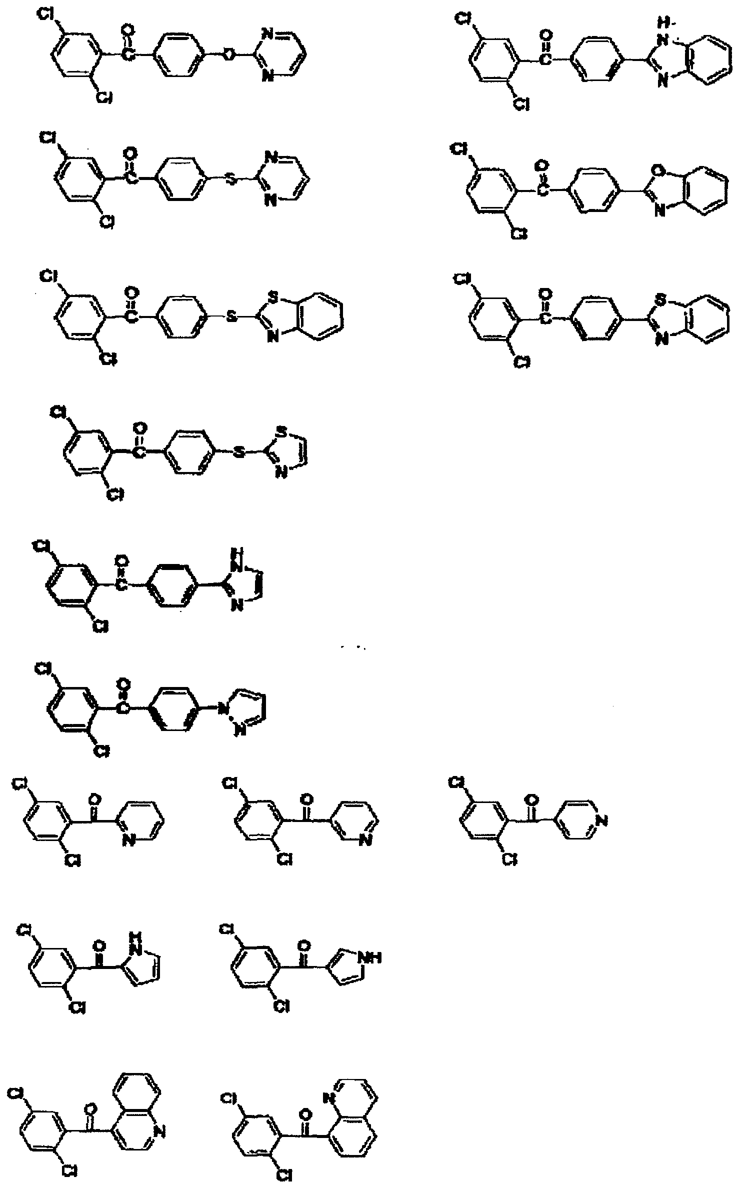

The examples further include the compounds in which a chlorine atom is replaced with a bromine atom and the isomers in which a chlorine atom or a bromine atom is bonded at different positions. Further examples include the compounds in which a -CO-bond is replaced with a -SO₂- bond. These compounds may be used singly or in a combination of two or more kinds.

Methods for synthesizing the compound (C) include nucleophilic substitution reaction between the compound represented by the following formula (26) and the nitrogen-containing heterocyclic compound.

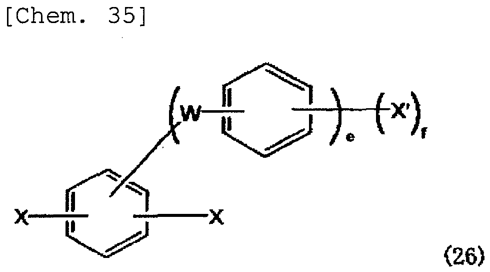

In the formula, X, W, e, and f are defined in the same way as in the formulae (24) and (25).

X' is a halogen atom; specifically, a fluorine atom or a chlorine atom is preferred and a fluorine atom is more preferred.

Specific examples of the compounds represented by formula
(26) include 2,4-dichloro-4'-fluorobenzophenone,
2,5-dichloro-4'-fluorobenzophenone,
2,6-dichloro-4'-fluorobenzophenone,
2,4-dichloro-2'-fluorobenzophenone,
2,5-dichloro-2'-fluorobenzophenone,
2,6-dichloro-2'-fluorobenzophenone,
2,4-dichlorophenyl-4'-fluorophenyl sulfone,
2,5-dichlorophenyl-4'-fluorophenyl sulfone,
2,6-dichlorophenyl-4'-fluorophenyl sulfone, and
2,4-dichlorophenyl-2'-fluorophenyl sulfone. Of these compounds,
2,5-dichloro-4'-fluorobenzophenone is preferable.

The nitrogen-containing heterocyclic compound has an active hydrogen. This active hydrogen is subjected to substitution reaction with the group represented by X' in the compound represented by the formula (26).

Examples of the nitrogen-containing heterocyclic compound having the active hydrogen include pyrrole, thiazole, isothiazole, oxazole, isoxazole, pyridine, imidazole, imidazoline, pyrazole, 1,3,5-triazine, pyrimidine, pyridazine, pyrazine, indole, quinoline, isoquinoline, purine, benzimidazole, benzoxazole, benzothiazole, tetrazole, tetrazine, triazole, carbazole, acridine, quinoxaline, quinazoline, 2-hydroxypyridine, 3-hydroxypyridine, 4-hydroxypyridine, 3-hydroxyquinoline, 8-hydroxyquinoline, 2-hydroxypyrimidine, 2-mercaptopyridine, 3-mercaptopyridine, 4-mercaptopyridine, 2-mercaptopyrimidine, and 2-mercaptobenzothiazole.

Of these compounds, pyrrole, imidazole, indole, carbazole, benzoxazole, benzimidazole, 2-hydroxypyridine, 3-hydroxypyridine, and 4-hydrodxypyridine are preferable.

The reaction of the compound represented by the formula (26) with the nitrogen-containing heterocyclic compound having an active hydrogen is preferably carried out in an organic solvent. A polar solvent is used such as N-methyl-2-pyrrolidone, N,N-dimethylacetamide, sulfolane, diphenyl sulfone, and dimethylsulfoxide. In orde to promote the reaction, alkali metals, alkali metal hydrides, alkali metal hydroxides, alkali metal carbonates and the like are used. In the reaction, the ratio between the compound represented by the formula (26) and the nitrogen-containing heterocyclic compound having an active hydrogen is equimolar or an excessive amount of the nitrogen-containing heterocyclic compound having an active hydrogen. Specifically, the nitrogen-containing heterocyclic compound having an active hydrogen is used preferably 1 to 3 mol, particularly 1 to 1.5 mol relative to 1 mol of the compound represented by the formula (26).

The reaction temperature is 0°C to 300°C, preferably 10°C to 200°C. The reaction time is 15 minutes to 100 hours, preferably 1 hour to 24 hours. The products are preferably purified by a method such as recrystallization before used.

[Polymerization Method]
In order to obtain the intended polyarylene copolymer, at first, the above individual compounds are copolymerized to yield precursors. The copolymerization is carried out in the presence of a catalyst, and the catalyst used herein is a catalyst system containing a transition metal compound. The catalyst system contains as essential components (1) a transition metal salt and a compound to serve as a ligand (referred to as "ligand component" hereinafter) or a transition metal complex coordinated with a ligand (including copper salt) and (2) a reducing agent. A salt other than the transition metal salt may be further added in order to increase the polymerization rate.

Examples of the transition metal salts include nickel compounds such as nickel chloride, nickel bromide, nickel iodide and nickel acetylacetonate; palladium compounds such as palladium chloride, palladium bromide and palladium iodide; iron compounds such as iron chloride, iron bromide and iron iodide; and cobalt compounds such as cobalt chloride, cobalt bromide and cobalt iodide. Of these, nickel chloride, nickel bromide, etc. are particularly preferred. Examples of the ligand include triphenylphosphine, tri(2-methyl)pheriylphosphine, tri(3-methyl)phenylphosphine, tri(4-methyl)phenylphosphine, 2,2'-bipyridine, 1,5-cyclooctadiene and 1,3-bis(diphenylphosphino)propane. Of these, triphenylphosphine, tri(2-methyl)phenylphosphine, and 2,2'-bipyridine are preferred. The ligands may be used singly or in combination of two or more kinds.

Examples of the transition metal (salts) coordinated with ligands include
nickel chloride-bis(triphenylphosphine),
nickel chloride-bis(tri(2-methyl)phenylphosphine),
nickel bromide-bis(triphenylphosphine),
nickel iodide-bis(triphenylphosphine),
nickel nitrate-bis(triphenylphosphine),
nickel chloride(2,2'-bipyridine),
nickel bromide(2,2'-bipyridine),
nickel iodide(2,2'-bipyridine),
nickel nitrate(2,2'-bipyridine),
bis(1,5-cyclooctadiene)nickel,
tetrakis(triphenylphosphine)nickel,
tetrakis(triphenylphosphito)nickel and
tetrakis(triphenylphosphine)palladium. Of these, nickel chloride-bis(triphenylphosphine), nickel
chloride-bis(tri(2-methyl)phenylphosphine), and nickel chloride(2,2'-bipyridine) are preferred.

Examples of the reducing agents employable in the catalyst system of the present invention include iron, zinc, manganese, aluminum, magnesium, sodium, and calcium, but zinc, magnesium and manganese are preferred. These reducing agents, if brought into contact with acids such as an organic acid, can be more activated and used.

Examples of the salts, other than the transition metal salts, employable in the catalyst system of the present invention, include sodium compounds such as sodium fluoride, sodium chloride, sodium bromide, lithium bromide, sodium iodide and sodium sulfate; potassium compounds such as potassium fluoride, potassium chloride, potassium bromide, potassium iodide and potassium sulfate; and ammonium compounds such as tetraethylammonium fluoride, tetraethylammonium chloride, tetraethylammonium bromide, tetraethylammonium iodide and tetraethylammonium sulfate, but among these, sodium bromide, sodium iodide, potassium bromide, lithium bromide, tetraethylammonium bromide and tetraethylammonium iodide are preferred.

The usage ratios of the individual components in the catalyst system are as follows. The transition metal salt or the transition metal (salt) coordinated with a ligand is used usually in an amount of 0.0001 to 10 mol, preferably 0.01 to 0.5 mol based on 1 mol of the total of the compound (A) capable of forming the structural unit represented by the general formula (1) and compound (B) capable of forming the structural unit represented by the general formula (3). When the amount is within this range, the polymerization reaction can proceed sufficiently, the catalytic activity can be high, and the molecular weight can be increased. If the amount is less than the above range, the polymerization does not proceed sufficiently, and if the amount is excessive, the molecular weight is decreased. If the catalyst system contains the transition metal salt and the ligand, the ligand is used usually in an amount of 0.1 to 100 mol, preferably 1 to 10 mol, based on 1 mol of the transition metal salt. When the amount is within the above range, the catalytic activity can be high, and the molecular weight can be increased.

The amount of the reducing agent used in the catalyst system is usually 0.1 to 100 mol, preferably 1 to 10 mol based on 1 mol of the total of the compound (A) capable of forming the structural unit represented by the general formula (1) and the compound (B) capable of forming the structural unit represented by the general formula (3). When the amount is within the above range, the polymerization proceeds sufficiently and the polymer can be obtained at high yield. The reducing agent in an amount less than the lower limit does not allow the polymerization to proceed sufficiently, while the amount thereof exceeding the upper limit makes purification of the resulting polymer difficult.

If salts other than the transition metal salts are used in the catalyst system, the amount used is usually 0.001 to 100 mol, preferably 0. 01 to 1 mol based on 1 mol of the total of the compound (A) capable of forming the structural unit represented by the general formula (1) and the compound (B) capable of forming the structural unit represented by the general formula (3). When the amount is within the above range, the effect of increasing the polymerization rate is high, and the purification of the resulting polymer is facilitated.

Examples of polymerization solvents employable in the present invention include tetrahydrofuran, cyclohexanone, dimethyl sulfoxide, N,N-dimethylformamide, N,N-dimethylacetamide, 1-methyl-2-pyrrolidone, γ-butyrolactone and γ-butyrolactam. Tetrahydrofuran, N,N-dimethylformamide, N,N-dimethylacetamide, and 1-methyl-2-pyrrolidone are preferred. These polymerization solvents are desirably used after dried sufficiently. In the polymerization solvent, the concentration of the compound (A) capable of forming the structural unit represented by the general formula (1) and the concentration of the compound (B) capable of forming the structural unit represented by the general formula (3) is usually 1 to 90% by mass, preferably 5 to 40% by mass.

The structural unit having the nitrogen-containing heterocyclic ring and other structural units, if introduced, are introduced such that the reaction between the compounds (A) and (B) involves the addition of a monomer corresponding to the compound (C) or other structural units, or such that the reaction between the compound (A) or (B) and the compound (C) is followed by the reaction between the resulting compound and a compound (A) or (B) that has not yet been reacted. The reaction conditions are such as described above.

In the reaction of the compounds (A), (B), and (C), charging amounts correspond to respective compositions of the individual structural units.
In the polymerization to obtain the polymer of the present invention, the polymerization temperature is usually 0 to 200°C, preferably 50 to 80°C, and the polymerization time is usually 0.5 to 100 hours, preferably 1 to 40 hours.

In the above production method, the sulfonate group contained in the copolymer obtained is converted to a sulfonic acid group (-SO₃H).
Specific examples include:
a method in which (1) the above polyarylene is poured into an excess amount of water or alcohol containing a small amount of hydrochloric acid and the resulting mixture is stirred for 5 minutes or longer;
a method in which (2) the above polyarylene is reacted in trifluoroacetic acid in a temperature range of 80 to 120°C for approximately 5 to 10 hours; and
a method in which (3) the above polyarylene is reacted in a solution, for example, a solution of N-methylpyrrolidone and the like containing lithium bromide in an amount of 1 to 3 mols relative to 1 mol of the sulfonate group (-SO₃R) in the polyarylene, in a temperature range of 80 to 150°C for approximately 3 to 10 hours, and into the reaction solution, hydrochloric acid is added.
The sulfonic acid metal salts are subjected to a method such as ion exchange method, and thereby hydrogen substitution is carried out.

(Method B1)
When Ar in the general formula (3) or (3-1) is an aromatic group having a substituent represented by -O(CH₂)ₚSO₃H or -O(CF₂)ₚSO₃H, for example, similarly to the method disclosed in JP-A-2005-60625, the polymer may be synthesized by a method in which a monomer of a precursor which will form the structural unit represented by the general formula (1) and a monomer of a precursor which will form the structural unit represented by the general formula (3) or (3-1) are copolymerized, and into the copolymer, an alkyl sulfonic acid or an alkyl sulfonic acid substituted with fluorine is introduced. Specifically, the copolymerization employs monomers having a skeleton represented by the general formula (3) or (3-1) and not having a sulfonic acid group or a sulfonate group, the monomer having ends including an OH group and/or a SH group (monomers represented by the following formulae (3'a), (3'b) and (3'-1)), and the OH group and the SH group are substituted with a -OM group and a -SM group, respectively (M is a hydrogen atom or an alkali metal atom). Thereafter, the resultant is reacted with a compound represented by the following general formula (7) or (8) under alkali conditions. Thereby, the polymer can be sulfonated.

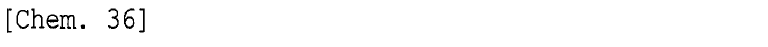

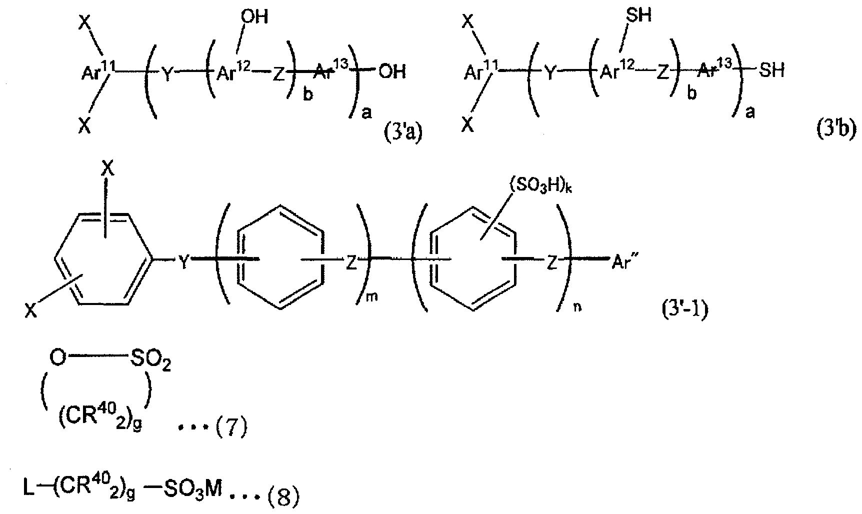

In the formulae (3'a), (3'b), and (3'-1), X is a halogen atom; and Ar" is an aromatic group having a OH group or a SH group.

In the formulae (7) and (8), R⁴⁰ is at least one atom or group selected from the group consisting of a hydrogen atom, a fluorine atom, an alkyl group, and a fluorine-substituted alkyl group; and g is an integer of from 1 to 20.

In the formula (8), L is any of a chlorine atom, a bromine atom, and an iodine atom; and M is a hydrogen atom, or an alkali metal atom.
The polyarylene block copolymer according to the present invention can be used for a polymer electrolyte for a cell, etc., and also for a proton conductive membrane.

[Method for Producing Electrolyte Membrane]
The polyarylene copolymer of the present invention comprises the above copolymer. The polyarylene copolymer, when used for electrolytes for primary and secondary batteries, solid polymer electrolytes for fuel cells, display elements, various sensors, signaling media, solid condensers and ion exchange membranes, etc., can be at a membrane state, at a solution state, or at powder state. Among these states, the membrane state and the solution state are preferable (hereinafter, the membrane state is called a polymer electrolyte membrane).

The polymer electrolyte membrane of the present invention can be produced by, for example, casting method in which the polyarylene copolymer mixed in an organic solvent is flow-cast over a substrate to form a film. The substrate used herein is not particularly limited and may be selected from those substrates commonly used in the solution casting methods. Examples thereof include plastic substrates and metal substrates. Preferably, substrates formed from thermoplastic resin such as polyethyleneterephthalate (PET) films are used.

The solvents for mixing the polyarylene copolymer are any solvents which dissolves or swells the copolymer, with examples including aprotic polar solvents such as N-methyl-2-pyrrolidone, N,N-dimethylformamide, γ-butyrolactone, N,N-dimethylacetamide, dimethylsulfoxide, dimethylurea and dimethylimidazolidinone; chlorine-based solvents such as dichloromethane, chloroform, 1,2-dichloroethane, chlorobenzene, and dichlorobenzene; alcohols such as methanol, ethanol, propyl alcohol, iso-propyl alcohol, sec-butyl alcohol and tert-butyl alcohol; alkylene glycol monoalkyl ethers such as ethylene glycol monomethyl ether, ethylene glycol monoethyl ether, and propylene glycol monoethyl ether; ketonessuch asacetone, methylethylketone, cyclohexanone, γ-butyllactone; ethers such as tetrahydrofuran, and 1,3-dioxane. These solvents may be used singly, or in combination of two or more kinds. In particular, in terms of solubility and solution viscosity, N-methyl-2-pyrrolidone (hereinafter, also called "NMP") is preferable.

When the above solvent is a mixture of the aprotic polar solvent and other solvents, the mixture contains the aprotic polar solvent in an amount of 95 to 25% by mass, preferably 90 to 25% by mass, and the other solvents in an amount of 5 to 75% by mass, preferably 10 to 75% by mass, provided that the total is 100% by mass. The proportion of the other solvents falling within this range provides an excellent effect of reducing the solution viscosity. Preferable combination of the aprotic polar solvent and other solvents is NMP, as the aprotic polar solvent, and methanol, as the other solvents, which will provide an effect of reducing the solution viscosity over a wide range of compositional ranges.

The concentration of the polymer in the solution obtained by dissolving the copolymer in the solvent depends on the molecular weight of the polyarylene copolymer having a sulfonic acid, but is usually from 5 to 40% by mass, preferably from 7 to 25% by mass. The concentration within the above range can produce the membranes with large thickness but is unlikely to result in the occurrence of pinholes. Furthermore, the concentration within the above range results in the solution having adequate viscosity so that the film production becomes easy and that the obtainable films have high surface smoothness.

The solution viscosity depends on the molecular weight of the polyarylene copolymer, and the concentration of the polymer, but usually ranges from 2,000 to 100,000 mPa·s, preferably from 3,000 to 50,000 mPa·s. When the solution viscosity is within the above range, the solution has a good retentivity and does not spill out of the substrate during the membrane formation. Moreover, since the solution viscosity is not so high, the solution can easily be extruded through a die and the flow-casting for the film production becomes easy.

After the membrane is formed as described above, the undried film obtained may be soaked into water to substitute the organic solvent in the undried film with water. This treatment reduces the amount of the residual solvent in the resultant polymer electrolyte membrane.

After the membrane formation, and before the soaking of the undried film into water, the undried film may be predried. The predrying is performed by holding the undried film at a temperature of 50 to 150°C for 0.1 to 10 hours.

If the undried film is soaked into water and then dried, as described above, a membrane is obtained which has a reduced amount of the residual solvent. The amount of the residual solvent in the membrane thus obtained is usually not more than 5% by mass. Depending on soaking conditions, the amount of the residual solvent in the resultant membrane can be not more than 1% by mass. Examples of such conditions are such that the amount of water used for 1 part of by mass of the undried film is not less than 50 parts by mass, the temperature of water in soaking is 10 to 60°C, and soaking time is 10 minutes to 10 hours.

After the undried film is soaked in water as described above, the film is dried at 30 to 100°C, preferably at 50 to 80°C, for 10 to 180 minutes, preferably for 15 to 60 minutes. Subsequently, the resultant is vacuum dried at 50 to 150 °C for 0.5 to 24 hours, preferably under a reduced pressure of 500 to 0.1 mm Hg, whereby the membrane can be obtained.

The polymer electrolyte membrane obtained by the method of the present invention usually has a dry thickness from 10 to 100 µm, preferably from 20 to 80 µm.
The polymer electrolyte membrane can be also produced by molding the polyarylene copolymer having the above sulfonate group or an alkali metal salt of the above sulfonic acid into a film by the above-described method, and then by subjecting the film to an appropriate post-treatment such as hydrolysis and acid treatment. Specifically, the polyarylene copolymer having the above sulfonate group or the above alkali metal salt of a sulfonic acid is molded into a film by the above-described method, and the membrane is subjected to hydrolysis or acid treatment, whereby the polymer electrolyte membrane comprising the polyarylene copolymer can be produced.

The production of the polymer electrolyte membrane may involve, together with the above polyarylene copolymer, inorganic acids such as sulfuric acid and phosphoric acid, phosphate glass, tungstic acid, phosphate hydrate, inorganic proton conductive particles such as β-alumina proton substituents, and proton-introducing oxides, an organic acid containing a carboxylic acid, an organic acid containing a sulfonic acid, an organic acid containing a phosphonic acid, an appropriate amount of water, and the like.
The electrolyte membrane thus obtained is employed as a proton conductive membrane.

[Membrane-Electrode Assembly for Solid Polymer Fuel Cell]
In the first embodiment of the membrane-electrode assembly for a solid polymer fuel cell according to the present invention, an anode electrode and a cathode electrode are formed on one side and on the other side of a proton electrolyte membrane of the proton electrolyte membrane comprising the polyarylene block copolymer.
In the second embodiment of the membrane-electrode assembly for a solid polymer fuel cell according to the present invention, at least one of an anode electrode and a cathode electrode comprises a polymer electrolyte comprising the polyarylene block copolymer.

The electrodes, employed for the membrane-electrode assembly for a solid polymer fuel cell according to the present invention, comprise an electrode electrolyte and an electrode catalyst obtained from catalyst metal particles or obtained by supporting catalyst metal particles on a conductive carrier, and optionally may comprise other components such as carbon fibers, dispersants, and water repellants.

The catalyst metal particles are not particularly limited as long as having a catalyst activity, but metal blacks composed of noble metal fine particles per se such as platinum black can be used.
The conductive carrier supporting the catalyst metal particles is not particularly limited as long as being equipped with conductivity and sufficient corrosion resistance, but is preferably a material mainly composed of carbon, which has a sufficient specific surface area for highly dispersing the catalyst metal particles, and has sufficient electron conductivity. Catalyst carriers constituting electrodes must be those supporting catalyst metal particles, and further functioning as a current collector extracting electrons to an outer circuit and incorporating electrons from the outer circuit. Catalyst carriers with high electrical resistance lead to cells with high internal resistance, which consequently lower the performance of the cells. For this reason, the catalyst carrier contained in the electrode must have sufficiently high electron conductivity. In other words, employable are such materials as to have sufficiently high electron conductivity as the electrode catalyst carrier, and preferable materials are carbon materials with developed pore. Preferable examples of the carbon materials with developed pore include carbon black, and active carbon. Examples of the carbon black include channel black, furnace black, thermal black, and acetylene black. The active carbon is obtained by carbonizing and activating various materials containing carbon atoms. The conductive carrier can contain metal oxides, metal carbide, metal nitride, or polymer compounds each having electron conductivity. The carbon as the main component used herein means the inclusion of 60% or more of carbon components.

As the catalyst metal particles to be supported on the conductive carrier, platinum or a platinum alloy can be used. The electrode catalyst, when using the platinum alloy, can be provided with more stability and activity. The platinum alloy is preferably an alloy of platinum with one or more metals selected from the group consisting of a platinum metal group other than platinum including ruthenium, rhodium, palladium, osmium and iridium, cobalt, iron, titanium, gold, silver, chromium, manganese, molybdenum, tungsten, aluminum, silicon, rhenium, zinc and tin. The platinum alloy may contain an intermetallic compound formed from platinum and a metal alloyed with platinum.

The support ratio of the platinum or the platinum alloy (the mass ratio of the platinum or the platinum alloy to the total mass of the supported carrier) is 20 to 80% by mass, particularly preferably 30 to 55% by mass. When the ratio is within this range, high output can be obtained. If the support ratio is excessively small, sufficient output may not be obtained, and if the support ratio is excessively large, particles of the platinum or the platinum alloy may not be supported, with good dispersibility, on the carbon material serving as a carrier.

The primary particle diameter of the platinum or the platinum alloy is preferably 1 to 20 nm in order to obtain a gas diffusion electrode with high activity. In particular, in terms of reaction activity, the primary particle diameter is preferably 2 to 5 nm, in which case large surface area of the platinum or the platinum alloy can be ensured.

As the electrode electrolyte, an ion conductive polymer electrolyte having a sulfonic acid group (an ion conductive binder) is preferably used. In general, the supported catalyst is covered with the electrolyte, and through a passage connected to the electrolyte, protons (H⁺) are transferred.

As the ion conductive polymer electrolyte having a sulfonic acid group, perfluorocarbon polymers represented by Nafion, Flemion and Aciplex (each of them is a product name) may be used. As the ion conductive polymer electrolyte, it is possible to use not only the perfluorocarbon polymers, but also those mainly composed of sulfonated products of vinyl monomers such as polystyrenesulfonic acid; polymers obtained by introducing a sulfonic acid group or a phosphoric acid group into a highly heat-resistant polymer such as polybenzimidazole, and polyether ether ketone; and aromatic hydrocarbon compounds such as the sulfonated polyarylene as described in the present specification.

In the second embodiment, the electrode electrolyte employs the polymer electrolyte comprising the polyarylene block copolymer according to present invention. At least one of the anode electrode and the cathode electrode may contain the polymer electrolyte, while the other electrode may contain the above ion conductive polymer electrolyte. Alternatively, both the electrodes may contain the polymer electrolyte comprising the polyarylene block copolymer according to present invention.

The use of the above electrolyte prevents the performance in high humidity from being lowered, the lowered performance being caused when the amount of gas permeation in the electrodes is decreased due to swelling. Further, the use of the above electrolyte does not cause the peeling between the electrode and electrolyte due to swelling and shrinkage. Consequently, a fuel cell can be provided with a membrane-electrode assembly having excellent durability against humidity change in power generation environment.

The above ion conductive polymer electrolyte functions as a binder with the catalyst particles in the electrodes, and thus is also referred to as an "ion conductive binder".

The ion conductive binder is preferably contained in a mass ratio of 0.1 to 3.0 relative to the catalyst particles, particularly preferably in a ratio of 0.3 to 2.0. If the ratio of the ion conductive binder is excessively small, protons cannot be transferred to the proton conductive membrane, in which case sufficient output may not obtained. If the ratio is excessively large, the ion conductive binder may entirely cover the catalyst particles, in which case gas may not reach the platinum and thereby sufficient output may not be obtained.

Examples of the carbon fibers to be optionally added include rayon type carbon fibers, PAN type carbon fibers, lignin poval-type carbon fibers, pitch-type carbon fibers, and carbon fibers grown in vapor phase. Of these, the carbon fibers grown in vapor phase are preferred. The addition of the carbon fibers increases a pore volume in an electrode catalyst layer, improving diffusion of a fuel gas and an oxygen gas and modifying flooding due to water generated to improve power generation performance. The carbon fibers may be contained in one of or both of an anode-side electrode catalyst layer and a cathode-side electrode catalyst layer.

Examples of the dispersants include anionic surfactant, cationic surfactants, amphoteric surfactants, and non-ionic surfactants. These dispersants may be used singly or in a combination of two or more kinds. Among them, the surfactants having a basic group are preferred, and the anionic or cationic surfactants are more preferred, and surfactants with a molecular weight of 5,000 to 30,000 are further more preferred. The addition of the dispersants to an electrode paste composition employed in the preparation of the electrode catalyst layer allows the electrode paste composition to have improved storage stability and flowability, and thereby productivity in coating is improved.

In the first embodiment according to the present invention, an anode electrode and a cathode electrode are provided on one side and the other side of the proton conductive membrane comprising the polyarylene block copolymer. The electrodes employed in this case are not particularly limited as long as being an ion conductive polymer electrolyte having a sulfonic acid group (an ion conductive binder).

The use of such a membrane-electrode assembly inhibits the swelling in hot water and shrinkage in drying, and can provide the fuel cell with durability against humidity change.
The membrane-electrode assembly for a solid polymer fuel cell according to the present invention may be consisted only of the catalyst layer of the anode, the proton conductive membrane, and the catalyst layer of the cathode. Particularly, this is sometimes called an electrode coated membrane (Catalyst Coated Membrane; CCM). In a further preferable embodiment, on outer sides of the catalyst layers of the anode and the cathode, gas diffusion layers each formed from a conductive porous substrate such as carbon paper and carbon cloth are disposed. In view of the gas diffusion layer functioning as a current collector, it is understood in the present specification that as long as the gas diffusion layers are included in an embodiment, the electrodes are referred to as including the gas diffusion layers and the catalyst layers.

The membrane-electrode assembly for a solid polymer fuel cell according to the present invention may be the combination of the electrodes in the second embodiment and the proton conductive membrane of the first embodiment.
As a method for producing the membrane-electrode assembly of the present invention, various method can be adopted such as a method (i) in which proton conducive membrane has the catalyst layers directly formed thereon, the catalyst layers optionally having the gas diffusion layers thereon; a method (ii) in which the catalyst layers are formed on substrates serving as the gas diffusion layers such as carbon paper, and the catalyst layers formed are joined with the proton conductive membrane; and a method (iii) in which the catalyst layers are formed on plates, and the catalyst layers formed are transferred to the proton conductive membrane, and thereafter, the plates are peeled, and the gas diffusion layers are optionally formed on the catalyst layers.

As a method for forming the catalyst layer, a known method can be adopted which employs a dispersion liquid obtained by dispersing the supported catalyst and the perfluorocarbon polymer having a sulfonic acid group in a dispersion medium, optionally involving the addition of water repellants, pore-forming agents, thickening agents, diluting solvents, etc., to form the catalyst layer on an ion exchange membrane, a gas diffusion layer, or a plate.

Examples of a method for applying the above electrode paste composition include brush coating, writing brush coating, bar coater coating, knife coater coating, doctor blade coating, screen printing, and spray coating. If the catalyst layer is not directly formed on the proton conductive membrane, the catalyst layer and the proton conductive membrane are preferably joined to each other by a method such as hot pressing method, adhesion method (see JP-A-7-220741).

The electrode-membrane structure of the present invention may have separators, functioning also as gas passage, formed on the catalyst layers or the gas diffusion layers to thereby constitute the solid polymer fuel cell. Into the cathode and the anode, an oxygen-containing gas and a hydrogen-containing gas are fed respectively. Specifically, separators each provided with a groove serving as a gas-flowing passage are disposed at outer sides of both the electrodes of the membrane-electrode assembly. By flowing respective gas into the gas-flowing passage, respective gas serving as fuel is fed into the membrane-electrode assembly.

[Example]
Hereinafter, the present invention will be described in detail with reference to Examples, but the present invention is not limited by the following Examples. In Examples, the reference to "%" means "% by mass" unless otherwise noted.

[Preparation of Electrolyte Membrane for Evaluation]
The copolymer obtained in each Example and Comparative Example was dissolved in N-methylpyrrolidone/methanol solution. The solution was cast over a PET substrate by the use of an applicator, and then was dried using an oven at 60°C for 30 minutes, at 80°C for 40 minutes, and at 120°C for 60 minutes to form a adequate thickness. A membrane dried was soaked in deionized water. After the soaking, the membrane wad dried at 50°C for 45 minutes, thereby obtaining a membrane for evaluation.

[Molecular Weight]
The copolymer obtained in each Example and Comparative Example was dissolved in N-methylpyrrolidone buffer solution (hereinafter, called NMP buffer solution), and by gel permeation chromatography (GPC), the number average molecular weight (Mn) and the weight average molecular weight (Mw) in terms of polystyrene were obtained. The NMP buffer solution was adjusted in such a ratio: NMP (3L) / phosphoric acid (3.3 mL) / lithium bromide (7.83 g).

[Sulfonic Acid Equivalent]
A sulfonated polymer obtained was washed using distilled water until washings became neutral, and free residual acids were removed, which was followed by drying. A predetermined amount of the polymer was weighed and dissolved in a THF/water mixed solvent. The resultant solution was mixed with phenolphthalein as an indicator, and the mixture was titrated with a NaOH standard solution to obtain a point of neutralization, from which the sulfonic acid equivalent (ion exchange capacity) (meq/g) was determined.

[Hot Water Experiment: How To Obtain Swelling/Shrinkage Factor]
A film was cut into 2.0 cm x 3.0 cm, and weighed, thereby providing a test piece for an experiment. The test piece was held under the conditions of 24°C, and a relative humidity (RH) of 50%. Then, the test piece was put into a 250 mL bottle made of polycarboriate. Thereto, approximately 100 mL of distilled water was added. The bottle was heated at 120°C for 24 hours by the use of a pressure cooker tester (PC-242HS manufactured by HIRAYAMA MFS CORP). After the experiment, respective films were taken out from the hot water, and water at the surface was slightly wiped off with a kimwipe. Then, the dimension was measured to thereby obtain a swelling factor. The state of the membrane was adjusted under the conditions of 24°C and RH of 50%, and water was distilled away. The dimension of the membrane after the hot water experiment was measured to thereby obtain a shrinkage factor. A swelling/shrinkage factor was obtained on the basis of the following relation.
Swelling factor = (dimension of 2 cm-side of the membrane in water/2 + dimension of 3 cm-side of the membrane in water/3) x 100/2
Shrinkage factor = (dimension of 2 cm-side of the membrane dried/2 + dimension of 3 cm-side of the membrane dried/3) x 100/2 Swelling/Shrinkage factor = (Swelling factor - 100) + (100 -Shrinkage factor)

[Measurement of Proton Conductivity]
An alternating current resistance was measured by pressing a platinum wire (f=0.5 mm) on a surface of a rectangular sample membrane 5 mm wide, which was kept in a constant temperature and humidity apparatus to determine an alternate current impedance between the platinum wires. That is, impedance under the environment of 85°C and relative humidity of 90% was measured at an alternate current of 10 kHz. A chemical impedance measurement system manufactured by NF Corporation was used as a resistance measurement instrument and JW241 manufactured by Yamato Scientific Co., Ltd. was used as a constant temperature and humidity apparatus. Five platinum wires were pressed at an interval of 5 mm and a distance between wires were varied between 5 and 20 mm to measure the alternate current resistance. The resistivity of a membrane was calculated from a gradient in a relation of the distance between wires and the resistance.
Resistivity R (Ω·cm) = 0.5 (cm) × membrane thickness (cm) × gradient in resistance vs. wire distance (Ω/cm)

[Measurement of Viscosity]
The copolymer obtained in each Example and Comparative Example was dissolved in N-methylpyrrolidone/methanol solution at a polymer amount of 16 wt%, and then the solution viscosity at 25°C was measured by the use of VISCOMETER MODELRE110H System (TOKI SANGYO Co., LTD.).

### <Synthesis of Structural Unit Having Sulfonic Acid Group>

Into a 3 L three-neck flask equipped with a stirrer, and a cooling tube, chlorosulfonic acid (233.0 g, 20 mol) was added, and then 2,5-dichlorobenzophenone (100.4 g, 400 mmol) was added. The mixture was reacted for 8 hours using an oil bath at 100°C. After a predetermined period of time, the reaction liquid was slowly poured into broken ice (1000 g), and extraction using ethyl acetate was carried out. An organic layer was washed with a saline solution, and was dried with magnesium sulfate. Then, the ethyl acetate was distilled away, thereby obtaining a crude crystal of pale yellow (3-(2,5-dichlorobenzoyl)benzene sulfonic acid chloride). The crude crystal was employed at the subsequent step without purification.

2,2-dimethyl-1-propanol(neopentylalcohol) (38.8 g, 440 mmol) was added into 300 mL of pyridine, and the mixture was cooled to approximately 10°C. Thereto, the crude crystal obtained above was slowly added over approximately 30 minutes. After the addition of the whole amount, the resultant was stirred for 30 minutes and thereby reacted. After the reaction, the reaction liquid was poured into 1000 mL of hydrochloric acid water, and a solid was precipitated and collected. The solid obtained was dissolved in ethyl acetate, and the solution was washed with a sodium bicarbonate aqueous solution and a saline water. The solution washed was dried with magnesium sulfate, and then ethyl acetate was distilled away, thereby obtaining a crude crystal. The crude crystal was allowed to recrystallize in methanol. Thereby, an intended product, a white crystal of 3-(2,5-dichlorobenzoyl)benzene sulfonic acid neopentyl (30-1) was obtained.

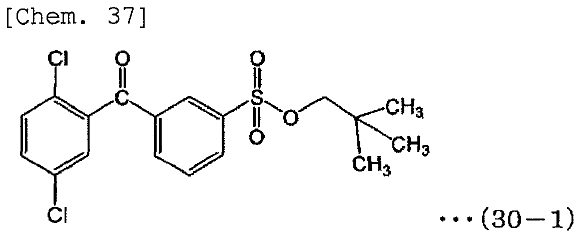

### <Synthesis of Basic Structural Unit>

Into a 2 L three-neck flask equipped with a stirrer, a thermometer and a nitrogen-introducing tube, 240.2 g (2.50 mol) of fluorobenzene was introduced, and was cooled to 10°C in an ice bath. Then, 134.6 g (0.50 mol) of 2,5-dichlorobenzoic acid chloride, and 86.7 g (0.65 mol) of aluminum chloride were slowly added such that the reaction temperature would not exceed 40°C. After the addition, the mixture was stirred at 40°C for 8 hours. After the disappearance of the raw materials was confirmed by thin-layer chromatography, the mixture was dropped in iced water, and extraction using ethyl acetate was carried out. The extraction liquid was neutralized by 5% sodium bicarbonate water, and the resultant was washed with saturated saline water. The liquid washed was dried with magnesium sulfate, and then the solvent was distilled away using an evaporator. The residue was allowed to recrystallize in methanol, thereby obtaining an intermediate product, 2,5-dichloro-4'-fluorobenzophenone. The yielded amount was 130 g, and the yield percentage was 97%.

Into a 2 L three-neck flask equipped with a stirrer, a thermometer, a cooling tube, a Dean-Stark tube, and a nitrogen-introducing three-way cock, 130.5 g (0.49 mol) of the above 2,5-dichloro-4'-fluorobenzophenone, 46.1 g (0.49 mol) of 2-hydroxypyridine, and 73.7 g (0.53 mol) of potassium carbonate were introduced. Then, 500 mL of N,N-dimethylacetamide (DMAc), and 100 mL of toluene were added, and in an oil bath, the mixture was heated under nitrogen atmosphere, and was reacted at 130°C under stirring. Water resulting from the reaction was formed into an azeotropic mixture with toluene and was removed to the outside of the system through the Dean-Stark tube during the reaction. Approximately 3 hours thereafter, almost no water was recognized to be generated. Then, most of the toluene was removed, and the reaction was allowed to continue at 130°C for 10 hours. A reaction liquid obtained was allowed to cool down, and then the reaction liquid was poured into 2 L of water/methanol (9/1). A product precipitated was filtered, and the filtrate was collected and dried. The dried product was introduced into a 2 L three-neck flask equipped with a stirrer, a thermometer, a cooling tube, a Dean-Stark tube, and a nitrogen-introducing three-way cock. The dried product was stirred in 1 L of toluene at 100°C, while the residual water content was distilled away, to thereby dissolve the dried product. After the solution was allowed to cool down, a crystallized product was filtered to thereby obtain an intended product of pale yellow, 2,5-dichloro-4'-(pyridine-2-oxy)benzophenone (30-2) in an amount of 142 g, and at an yield percentage of 83%.

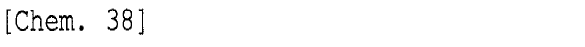

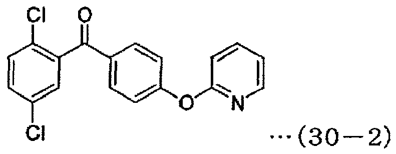

### [Example 1]

### <Synthesis of Structural Unit Having No Sulfonic Acid Group>

Into a 1 L three-neck flask equipped with a stirrer, a thermometer, a Dean-Stark tube, a nitrogen-introducing tube and a cooling tube, 90.1 g (0.52 mol) of 2,6-dichlorobenzonitrile, 147.82 g (0.48 mol) of 4,4'-(3,3,5-trimethylcyclohexylidene)bisphenol (BisP-TMC), and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190 °C, the stirring was carried out for 3 hours, and then 24.6 g (0.14 mol) of 2,6-dichlorobenzonitrile was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 180 g of an intended product (yield percentage: 90%) was obtained. Mn measured by GPC was 6,400. The compound obtained was identified to be an oligomer represented by the formula (40-1).

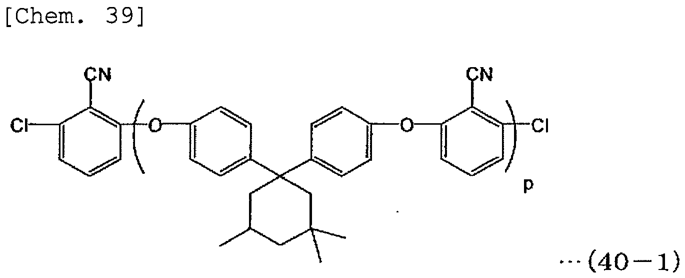

38.81 g (96. 7 mmol) of the compound represented by the above (30-1), 0.334 g (0.97 mmol) of the compound represented by the above (30-2), 14.92 g (2.33 mmol) of the compound represented by the above (40-1), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.40 g (338 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-1).

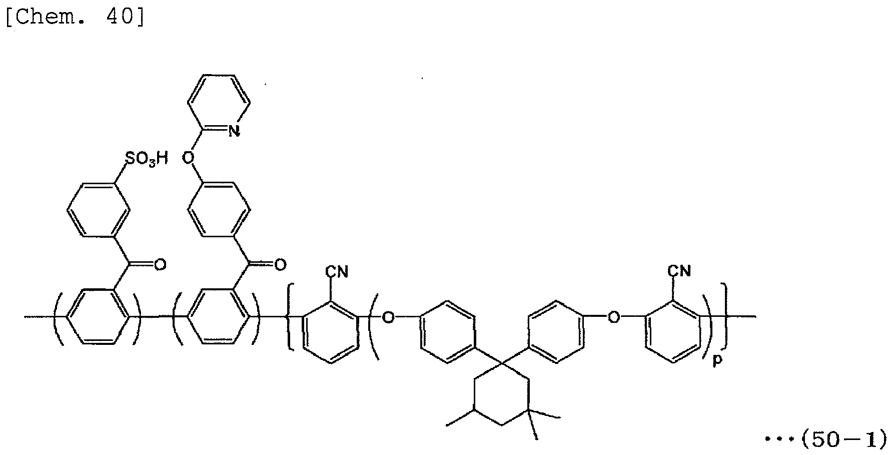

### [Example 2]

A polymer was obtained in the same way as in Example 1, except that 38.91 g (97.0 mmol) of the compound represented by the above (30-1), 0.334 g (0.97 mmol) of the compound represented by the above (30-2), 13.18 g (2.06 mmol) of the compound represented by the above (40-2), and 29.48 g (339 mmol) of lithium bromide were used. Regarding a polymer obtained, the result of the measurement by GPC of the molecular weight, the ion exchange capacity, and the evaluation of the resulting electrolyte membrane are set forth in Table 1-1. Further, the viscosity of the solution of the polymer obtained was measured, and the result thereof is set forth in Table 1-2.

[Example 3]
A polymer was obtained in the same way as in Example 1, except that 39.01 g (97.2 mmol) of the compound represented by the above (30-1), 0.335 g (0.97 mmol) of the compound represented by the above (30-2), 11.58 g (1.81 mmol) of the compound represented by the above (40-2), and 29.55 g (340 mmol) of lithium bromide were used. Regarding a polymer obtained, the result of the measurement by GPC of the molecular weight, the ion exchange capacity, and the evaluation of the resulting electrolyte membrane are set forth in Table 1-1.

[Example 4]
Into a 1 L three-neck flask equipped with a stirrer, a thermometer, a Dean-Stark tube, a nitrogen-introducing tube and a cooling tube, 90.1 g (0.52 mol) of 2,6-dichlorobenzonitrile, 167.86 g (0.48 mol) of 1,1'-(4-hydroxyphenyl)cyclododecane, and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190 °C, the stirring was carried out for 3 hours, and then 24.6 g (0.14 mol) of 2,6-dichlorobenzonitrile was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 198 g of an intended product (yield percentage: 90%) was obtained. Mn measured by GPC was 6, 600. The compound obtained was identified to be an oligomer represented by the formula (40-2).

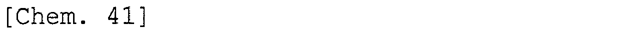

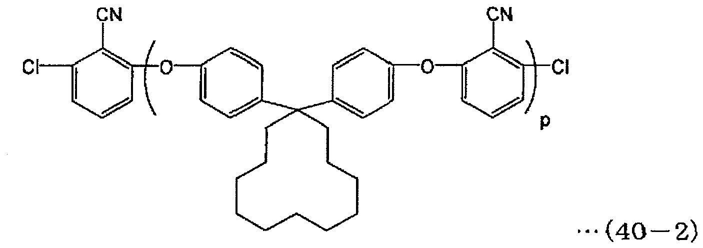

38. 94 g (97.0 mmol) of the compound represented by the above (30-1), 0.334 g (0.97 mmol) of the compound represented by the above (30-2), 13.18 g (2.0 mmol) of the compound represented by the above (40-2), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.50 g (339 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-2).

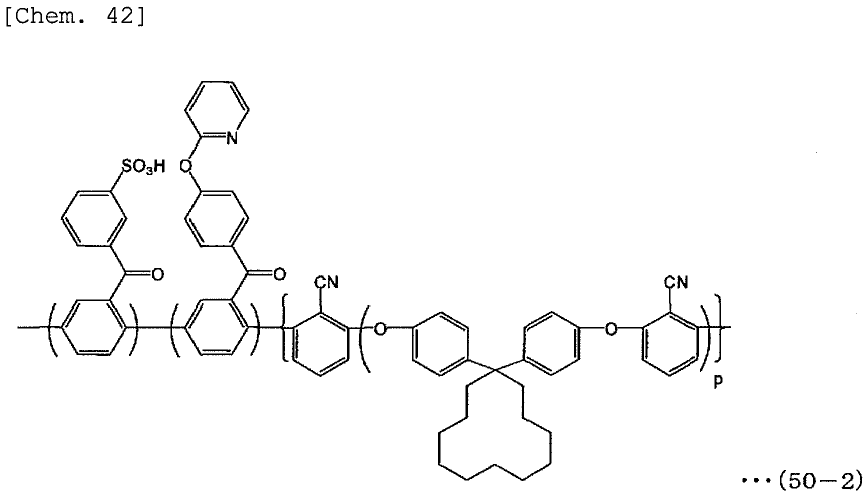

[Example 5] Into a 1 L three-neck flask equipped with a stirrer, a thermometer, a Dean-Stark tube, a nitrogen-introducing tube and a cooling tube, 90.1 g (0.52 mol) of 2,6-dichlorobenzonitrile, 152.58 g (0. 48 mol) of 2,2'-(4-hydroxyphenyl)adamantane, and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190°C, the stirring was carried out for 3 hours, and then 24. 6 g (0.14 mol) of 2, 6-dichlorobenzonitrile was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 183 g of an intended product (yield percentage: 90%) was obtained. Mn measured by GPC was 6,000. The compound obtained was identified to be an oligomer represented by the formula (40-3).

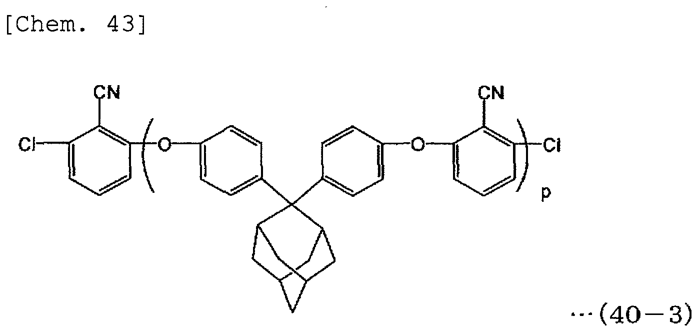

38.86 g (96.8 mmol) of the compound represented by the above (30-1), 0.333 g (0.97 mmol) of the compound represented by the above (30-2), 13.17 g (2.2 mmol) of the compound represented by the above (40-3), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.44 g (339 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-3).

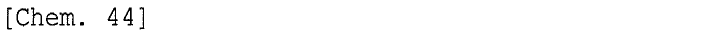

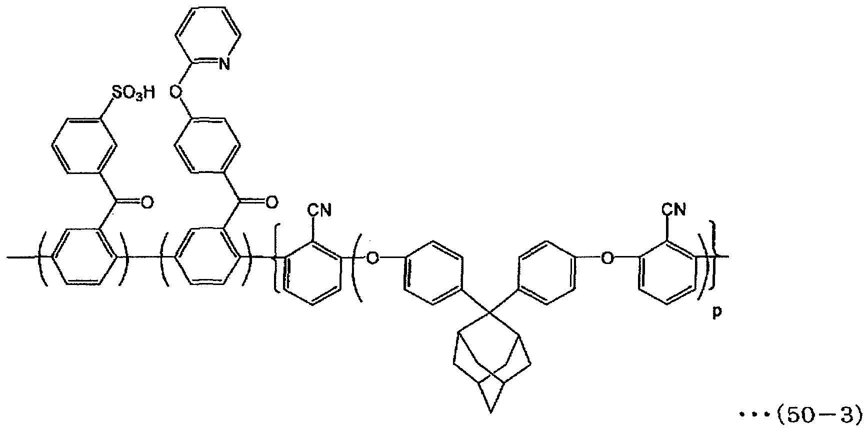

[Example 6]
Into a 1 L three-neck flask equipped with a stirrer, a thermometer, a Dean-Stark tube, a nitrogen-introducing tube and a cooling tube, 90.1 g (0.52 mol) of 2,6-dichlorobenzonitrile, 152.58 g (0.48 mol) of 1, 3- (4-hydroxyphenyl) adamantane, and 85. 6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190°C, the stirring was carried out for 3 hours, and then 24. 6 g (0.14 mol) of 2, 6-dichlorobenzonitrile was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 184 g of an intended product (yield percentage: 90%) was obtained. Mn measured by GPC was 6,100. The compound obtained was identified to be an oligomer represented by the formula (40-4).

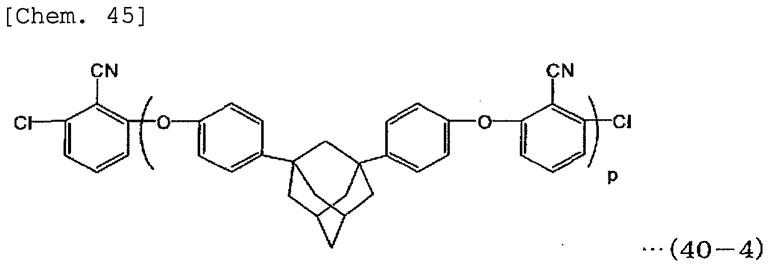

38.87 g (96. 9 mmol) of the compound represented by the above (30-1), 0.333 g (0.97 mmol) of the compound represented by the above (30-2), 13.17 g (2.2 mmol) of the compound represented by the above (40-4), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.45 g (339 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-4).

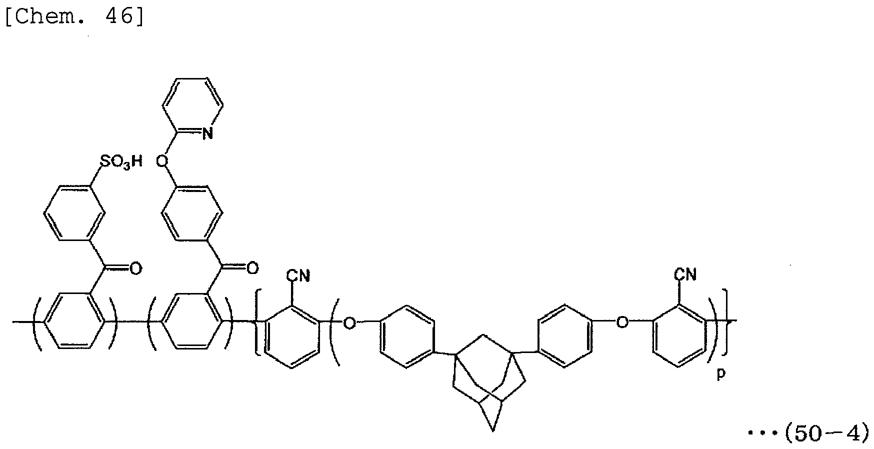

[Example 7]
Into a 1 L three-neck flask equipped with a stirrer, a thermometer, a Dean-Stark tube, a nitrogen-introducing tube and a cooling tube, 90.1 g (0.52 mol) of 2,6-dichlorobenzonitrile, 133.5 g (0.48 mol) of 2,2'-(4-hydroxyphenyl)norbornene, and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190°C, the stirring was carried out for 3 hours, and then 24. 6 g (0. 14 mol) of 2, 6-dichlorobenzonitrile was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 167 g of an intended product (yield percentage: 90%) was obtained. Mn measured by GPC was 6,200. The compound obtained was identified to be an oligomer represented by the formula (40-5).

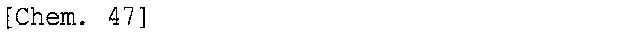

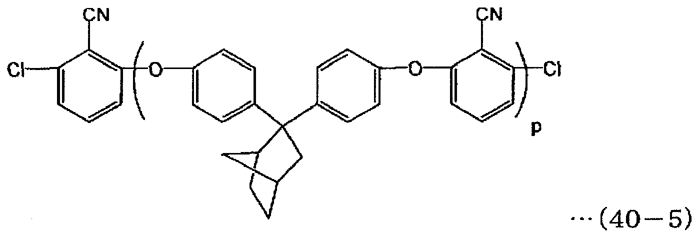

38.89 g (96. 9 mmol) of the compound represented by the above (30-1), 0.334 g (0.97 mmol) of the compound represented by the above (30-2), 13.18 g (2.1 mmol) of the compound represented by the above (40-5), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79 °C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.46 g (339 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-5).

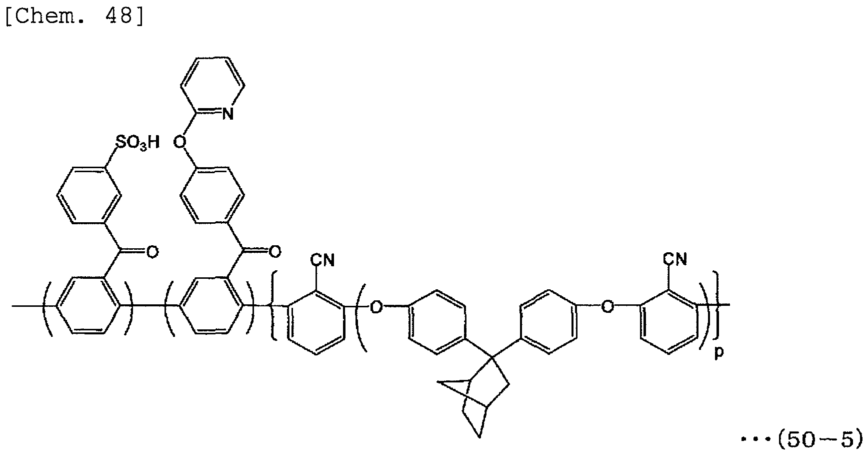

[Example 8]
Into a 1 L three-neck flask equipped with a stirrer, a thermometer, a Dean-Stark tube, a nitrogen-introducing tube and a cooling tube, 150. 42 g (0.52 mol) of bis (4-chlorophenyl) sulfone, 147.82 g (0.48 mol) of 4,4'-(3,3,5-trimethylcyclohexylidene)bisphenol (BisP-TMC), and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190°C, the stirring was carried out for 3 hours, and then 41.02 g (0.14 mol) of bis(4-chlorophenyl)sulfone was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 234 g of an intended product (yield percentage: 90%) was obtained. Mn measured by GPC was 8, 200 . The compound obtained was identified to be an oligomer represented by the formula (40-6).

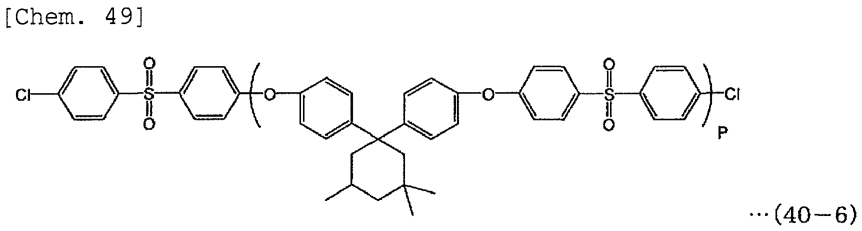

39.01 g (97.2 mmol) of the compound represented by the above (30-1), 0.335 g (0.97 mmol) of the compound represented by the above (30-2), 14.96 g (1.82 mmol) of the compound represented by the above (40-6), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.55 g (340 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4. 1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-6).

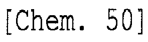

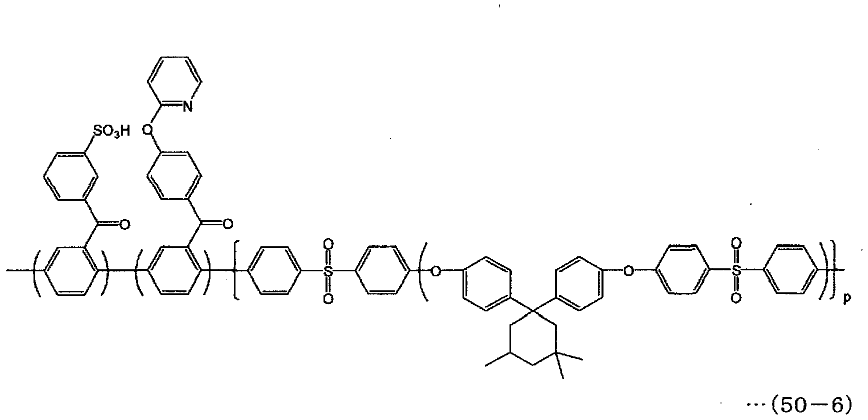

[Example 9]
Into a 1 L three-neck flask equipped with a stirrer, a thermometer, a Dean-Stark tube, a nitrogen-introducing tube and a cooling tube, 150. 42 g (0. 52 mol) of bis (4-chlorophenyl) sulfone, 167.86 g (0.48 mol) of 1,1'-(4-hydroxyphenyl)cyclododecane, and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190 °C, the stirring was carried out for 3 hours, and then 41.02 g (0.14 mol) of bis(4-chlorophenyl)sulfone was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 250 g of an intended product (yield percentage: 90%) was obtained. Mn measured by GPC was 7,600. The compound obtained was identified to be an oligomer represented by the formula (40-7).

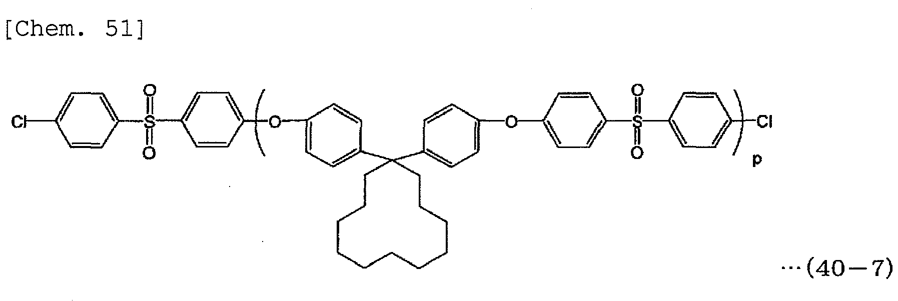

39.04 g (97.3 mmol) of the compound represented by the above (30-1), 0.335 g (0.97 mmol) of the compound represented by the above (30-2), 13.2 g (1.74 mmol) of the compound represented by the above (40-7), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.57 g (340 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-7).

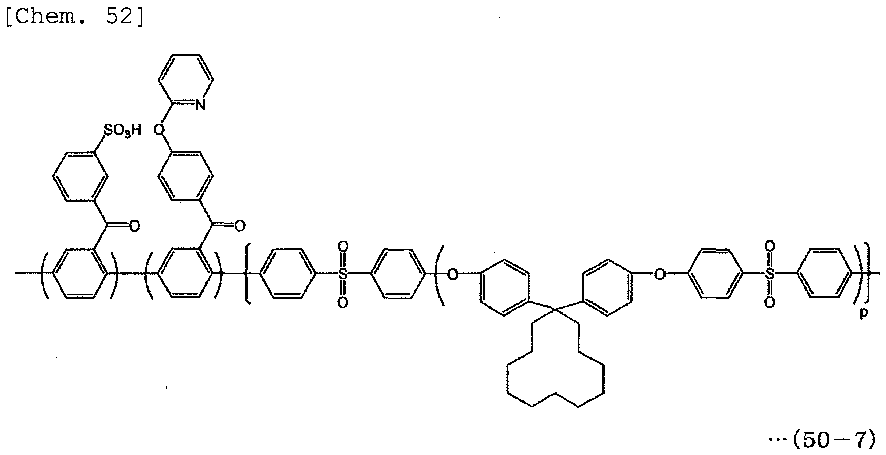

[Example 10]
Into a 1 L three-neck flask equipped with a stirrer, a thermometer, a Dean-Stark tube, a nitrogen-introducing tube and a cooling tube, 150.42 g (0.52 mol) of bis (4-chlorophenyl) sulfone, 152.58 g (0.48 mol) of 2,2'-(4-hydroxyphenyl)adamantane, and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150 °C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190°C, the stirring was carried out for 3 hours, and then 41.02 g (0.14 mol) of bis (4-chlorophenyl) sulfone was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55 °C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 237 g of an intended product (yield percentage: 90%) was obtained. Mn measured by GPC was 7,700. The compound obtained was identified to be an oligomer represented by the formula (40-8).

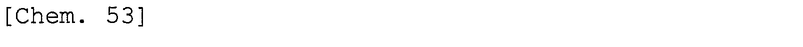

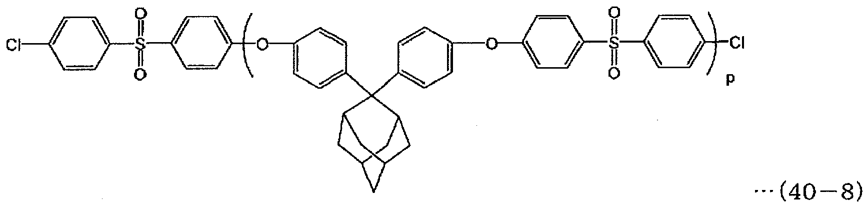

39.05 g (97.3 mmol) of the compound represented by the above (30-1), 0.335 g (0.97 mmol) of the compound represented by the above (30-2), 13.2 g (1.71 mmol) of the compound represented by the above (40-8), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.58 g (340 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4. 1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-8).

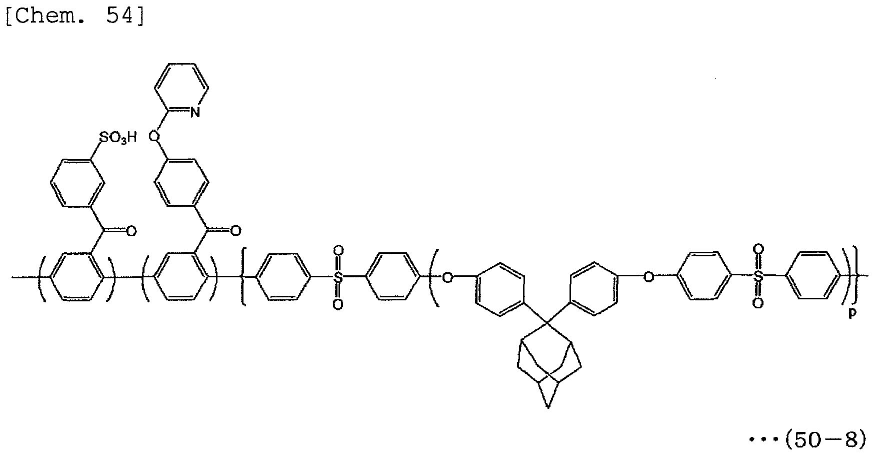

[Example 11]
Into a 1 L three-neck flask equipped with a stirrer, a thermometer, a Dean-Stark tube, a nitrogen-introducing tube and a cooling tube, 150.42 g (0.52 mol) of bis (4-chlorophenyl) sulfone, 152.58 g (0. 48 mol) of 1, 3- (4-hydroxyphenyl) adamantane, and 85. 6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190 °C, the stirring was carried out for 3 hours, and then 41. 02 g (0.14 mol) of bis (4-chlorophenyl) sulfone was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80 °C. As a result, 236 g of an intended product (yield percentage: 90%) was obtained. Mn measured by GPC was 7, 700. The compound obtained was identified to be an oligomer represented by the formula (40-9).

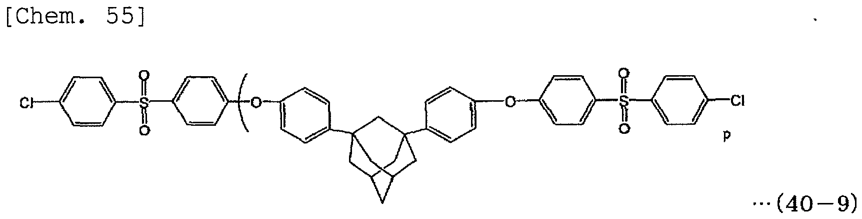

39.05 g (97. 3 mmol) of the compound represented by the above (30-1), 0.335 g (0.97 mmol) of the compound represented by the above (30-2), 13.2 g (1.71 mmol) of the compound represented by the above (40-9), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.58 g (340 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-9).

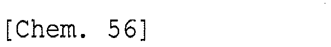

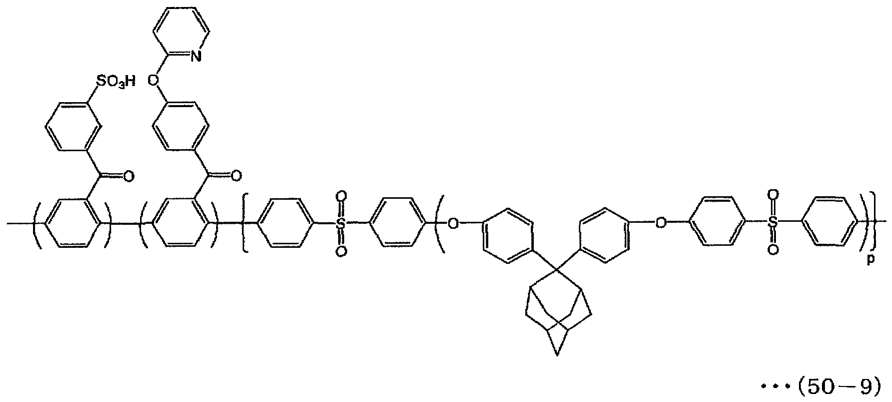

[Example 12]
Into a 1 L three-neck flask equipped with a stirrer, a thermometer, a Dean-Stark tube, a nitrogen-introducing tube and a cooling tube, 150.42 g (0.52 mol) of bis (4-chlorophenyl) sulfone, 133.5 g (0.48 mol) of 2,2'- (4-hydroxyphenyl) norbornene, and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190°C, the stirring was carried out for 3 hours, and then 41.02 g (0.14 mol) of bis (4-chlorophenyl) sulfone was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 220 g of an intended product (yield percentage: 90%) was obtained. Mn measured by GPC was 6,900. The compound obtained was identified to be an oligomer represented by the formula (40-10).

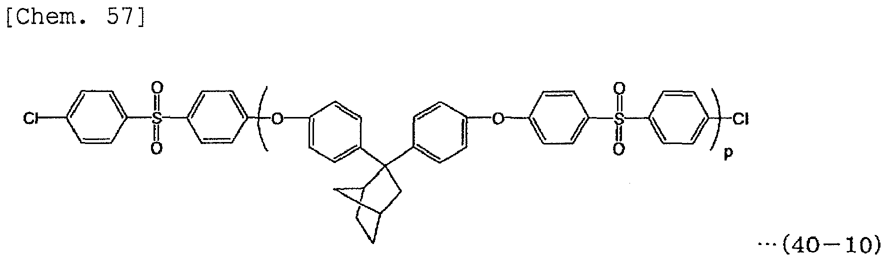

38.97 g (97.3 mmol) of the compound represented by the above (30-1), 0.334 g (0.97 mmol) of the compound represented by the above (30-2), 13.2 g (1.91 mmol) of the compound represented by the above (40-10), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.52 g (340 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-10).

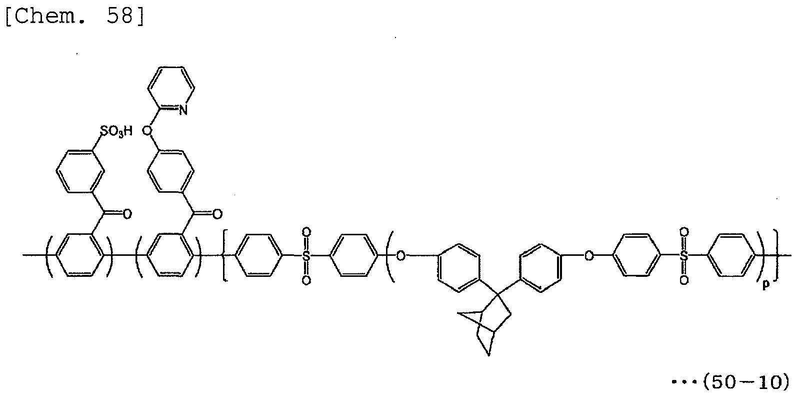

[Example 13]
Into a 1 L three-neck flask equipped with a stirrer, a thermometer, a Dean-Stark tube, a nitrogen-introducing tube and a cooling tube, 90.1 g (0.52 mol) of 2,6-dichlorobenzonitrile, 127.79 g (0.48 mol) of 1,1'-(4-hydroxyphenyl) cyclohexane (Bis-Z), and 85.6 g (0.62 mol) of potassium carbonate were weighed and introduced. After the flask was purged with nitrogen, 599 mL of sulfolane and 299 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased from 180 to 190°C, the stirring was carried out for 3 hours, and then 24.6 g (0.14 mol) of 2, 6-dichlorobenzonitrile was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 159 g of an intended product (yield percentage: 90%) was obtained. Mn measured by GPC was 6,400. The compound obtained was identified to be an oligomer represented by the formula (40-11).

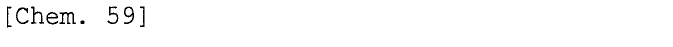

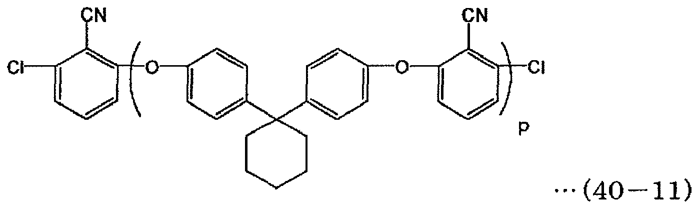

38.81 g (96.7 mmol) of the compound represented by the above (30-1), 0.334 g (0.97 mmol) of the compound represented by the above (30-2), 14.92 g (2.33 mmol) of the compound represented by the above (40-11), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 193 mL of DMAc, and the resultant was stirred for 30 minutes, and filtered using Celite as a filter aid.

Into the filtrate, 29.40 g (338 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4. 1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (50-11). Further, the viscosity of the solution of the polymer obtained was measured, and the result thereof is set forth in Table 1-2.

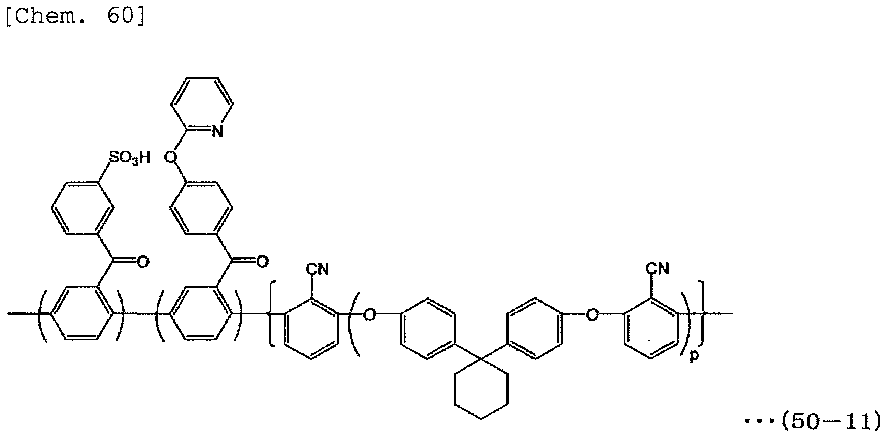

[Comparative Example 1]
Into a 1 L three-neck flask equipped with a stirrer, a thermometer, a Dean-Stark tube, a nitrogen-introducing tube and a cooling tube, 154.8 g (0.9 mol) of 2,6-dichlorobenzonitrile, 269.0 g (0.8 mol) of 2,2-bis(4-hydroxyphenyl)-1,1,1,3,3,3-hexafluoropropane, and 143.7 g (1.04 mol) of potassium carbonate were weighed and introduced. After the flask was purged with nitrogen, 1020 mL of sulfolane and 510 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased to 200°C, the stirring was carried out for 3 hours, and then 51.6 g (0.3 mol) of 2,6-dichlorobenzonitrile was added. The reaction was further allowed to proceed for 5 hours.

After the reaction liquid was allowed to cool down, 250 mL of toluene was added in order to dilute the reaction liquid. Inorganic salts insoluble in the reaction liquid was filtered off, and the filtrate was poured into 8 L of methanol in order to precipitate a product. The product precipitated was filtered, and the filtrate was dried, and the dried product was dissolved in 500 mL of tetrahydrofuran. This solution was poured into 5 L of methanol for precipitation. A white solid precipitated was filtered, and the filtrate was dried, to thereby obtain 258 g of an intended product. Mn measured by GPC was 8, 200. The compound obtained was identified to be an oligomer represented by the formula (60-1).

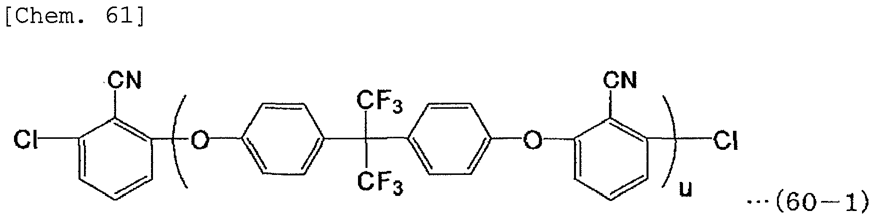

39.05 g (97.3 mmol) of the compound represented by the above (30-1), 0.335 g (0.97 mmol) of the compound represented by the above (30-2), 14.06 g (1.72 mmol) of the compound represented by the above (60-1), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C) , and the reaction was made for 3 hours. During the reaction, the increase in viscosity in the system was observed. The polymerization reaction solution was diluted with 373 mL of DMAc, and the resultant was stirred for 30 minutes, and filtered using Celite as a filter aid.

Into the filtrate, 29.58 g (340 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered. Then, the filtrate was washed. The washed product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (70-1). Further, the viscosity of the solution of the polymer obtained was measured, and the result thereof is set forth in Table 1-2.

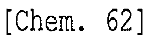

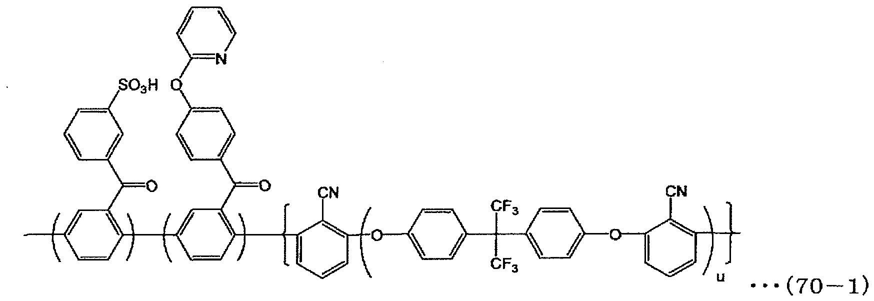

[Comparative Example 2]
Into a 1 L three-neck flask equipped with a stirrer, a thermometer, a Dean-Stark tube, a nitrogen-introducing tube and a cooling tube, 150. 42 g (0.52 mol) of bis (4-chlorophenyl) sulfone, 160.11 g (0.48 mol) of 2,2-bis(4-hydroxyphenyl)-1,1,1,3,3,3-hexafluoropropane, and 85.56 g (0.62 mol) of potassium carbonate were weighed and introduced. After the flask was purged with nitrogen, 600 mL of sulfolane and 300 mL of toluene were added, and the mixture was stirred. In an oil bath, a reaction liquid was heated and refluxed at 150°C. Water generated by the reaction was trapped in the Dean-Stark tube. 3 hours thereafter, almost no water was recognized to be generated, at which time, toluene was removed through the Dean-Stark tube to the outside of the system. With the reaction temperature slowly increased to 200°C, the stirring was carried out for 3 hours, and then 41.02 g (0.14 mol) of bis(4-chlorophenyl)sulfone was added. The reaction was further allowed to proceed for 5 hours.

After the reaction liquid was allowed to cool down, the reaction liquid was poured into 2395 mL of a methanol/4 wt% (volume ratio: 5/1) sulfuric acid solution for precipitation. A product precipitated was filtered, and the filtrate was stirred in 2395 mL of water at 55°C for 1 hour. The resultant was filtered, and the filtrate was again stirred in 2395 mL of water at 55°C for 1 hour. The resultant was filtered, and further the filtrate was stirred in 2395 mL of methanol at 55°C for 1 hour. The resultant was filtered, and the filtrate was again stirred in 2395 mL of methanol at 55°C for 1 hour. The resultant was filtered. The filtrate was dried in air, and vacuum dried at 80°C. As a result, 243 g of an intended product (yield percentage: 90%) was obtained. Mn measured by GPC was 7,800. The compound obtained was identified to be an oligomer represented by the formula (60-2).

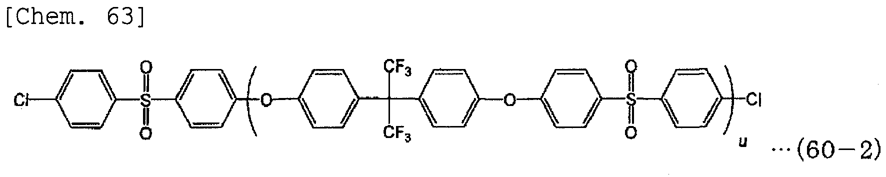

39.06 g (97.3 mmol) of the compound represented by the above (30-1), 0.335 g (0.97 mmol) of the compound represented by the above (30-2), 13.2 g (1.69 mmol) of the compound represented by the above (60-2), 1.96 g (3.0 mmol) of bis(triphenylphosphine)nickeldichloride, 2.36 g (9 mmol) of triphenylphosphine, and 11.77 g (180 mmol) of zinc were mixed, and into the mixture, 160 mL of dried dimethylacetamide (DMAc) was added under nitrogen.

The reaction system was heated under stirring (heated eventually to 79°C), and the reaction was made for 3 hours. During the reaction, the increase in viscosity in the system was observed. The polymerization reaction solution was diluted with 373 mL of DMAc, and the resultant was stirred for 30 minutes, and filtered using Celite as a filter aid.

Into the filtrate, 29.59 g (340 mmol) of lithium bromide was added, and the mixture was reacted, with the temperature of the mixture being 120°C, for 7 hours, under nitrogen atmosphere. After the reaction, the reaction liquid was cooled to room temperature, which was poured to 4.1 L of water for precipitation. A product precipitated was soaked in acetone, and the resultant was filtered and washed. The obtainable product, while being stirred in 6500 g of 1N sulfuric acid, was washed. The product was filtered, and the filtrate was washed with ion exchange water until the pH of the washings became 5 or more. Regarding a polymer obtained, the result of the measurement by GPC of the molecular weight, the ion exchange capacity, and the evaluation of the resulting electrolyte membrane are set forth in Table 1-1. It was found that the polymer obtained was represented by the following general formula (70-2).

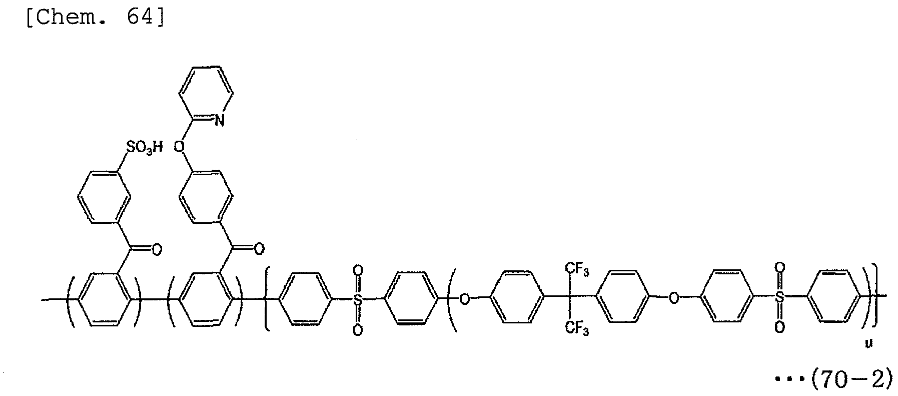

**[Table 1-1]**

| Table 1-1 | Structure | | Polymer molecular weight | | Ion exchange capacity | Hot water experiment 120°C x 24h | Proton Conductivity 85°Cx90%RH |
|---|---|---|---|---|---|---|---|
| | | | Mw | Mn | meq/g | Swelling/Shrinkage factor | S/cm |
| Ex. 1 | DBN | 4,4'-(3,3,5-trimethylcyclohexylidene)bisphenol | 132000 | 48000 | 2.41 | 12 | 0.32 |
| Ex. 2 | DBN | 4,4'-(3,3,5-trimethylcyclohexylidene)bisphenol | 144000 | 49000 | 2.51 | 12 | 0.34 |
| Ex. 3 | DBN | 4,4'-(3,3,5-trimethylcyclohexylidene)bisphenol | 155000 | 52000 | 2.61 | 15 | 0.38 |
| Ex. 4 | DBN | 1,1'-(4-hydroxyphenyl)cyclododecane | 164000 | 61000 | 2.40 | 12 | 0.32 |
| Ex. 5 | DBN | 2,2'-(4-hydroxyphenyl)adamantane | 145000 | 43000 | 2.39 | 11 | 0.31 |
| Ex. 6 | DBN | 1,3-(4-hydroxyphenyl)adamantane | 156000 | 45000 | 2.40 | 11 | 0.31 |
| Ex. 7 | DBN | 2,2'-(4-hydroxyphenyl)norbornene | 143000 | 47000 | 2.41 | 12 | 0.32 |
| Ex. 8 | DCDS | 4,4'-(3,3,5-trimethylcyclohexylidene)bisphenol | 142000 | 59000 | 2.47 | 15 | 0.33 |
| Ex. 9 | DCDS | 1,1'-(4-hydroxyphenyl)cyclododecane | 152000 | 56300 | 2.45 | 17 | 0.35 |
| Ex.10 | DCDS | 2,2'-(4-hydroxyphenyl)adamantane | 135000 | 48000 | 2.48 | 15 | 0.34 |
| Ex.11 | DCDS | 1,3-(4-hydroxyphenyl)adamantane | 154000 | 57000 | 2.45 | 17 | 0.34 |
| Ex.12 | DCDS | 2,2'-(4-hydroxyphenyl)norbornene | 140000 | 46000 | 2.50 | 15 | 0.35 |
| Com. Ex.1 | DBN | Bis-AF | 211000 | 75000 | 2.33 | 23 | 0.31 |
| Com. Ex.2 | DCDS | Bis-AF | 153000 | 54000 | 2.39 | 26 | 0.32 |

As shown in Table 1-1, the inclusion of the specific structural unit (1-1) or (1-2) enables the inhibition of the swelling in hot water and shrinkage in drying.

**[Table 1-2]**

| Table 1-2 | Structure | | Viscosity of polymer solution |
|---|---|---|---|
| | | | mPa·s |
| Ex.2 | DBN | 4,4'-(3,3,5-trimethylcyclohexylidene)bisphenol | 6800 |
| Ex. 13 | DBN | 1,1'-(4-hydroxyphenyl)cyclohexane | 8500 |
| Com. Ex.1 | DBN | Bis-AF | 6000 |

As shown in Table 1-2, in the present invention, the inclusion of the specific structural unit (1-1) or (1-2) can lower the viscosity of the polymer solution used in the preparation of a membrane, and thereby a membrane with more uniformity can be produced with good productivity.

### Example According To First Embodiment

### <Preparation of Membrane-Electrode Assembly>

On carbon blacks (furnace black) having an average diameter of 50 nm, platinum particles were supported at a mass ratio of carbon blacks:platinum = 1:1, thereby preparing catalyst particles . Then, in a perfluoroalkylene sulfonic acid polymer compound (Nafion (product name) manufactured by Dupont) solution as an ion conductive binder, the above catalyst particles were uniformly dispersed at a mass ratio of the ion conductive binder: catalyst particles = 8 : 5, thereby preparing a catalyst paste.

On both sides of the proton conductive membrane comprising the polymer obtained in Examples 1 to 7 and Comparative Example 1, the catalyst paste was coated using a bar coater such that the platinum content would become 0.5 mg/cm². The coating was followed by drying. Thereby, an electrode coated membrane (Catalyst Coated Membrane, hereinafter, called "CCM") was obtained. The drying conditions were such that a drying at 100°C for 15 minutes was carried out, and a subsequent drying was carried out at 140°C for 10 minutes.

Carbon blacks were mixed with polytetrafluoroethylene (PTFE) particles at a mass ratio of carbon blacks:PTFE particles = 4:6. A mixture obtained was uniformly dispersed in ethylene glycol to prepare a slurry, and the slurry was coated on one side of carbon paper. The slurry coated was dried, thereby providing an underlying layer. Thereby, two gas diffusion layers were prepared each formed from the underlying layer and carbon paper.

Between the underlying layer sides of the gas diffusion layers, the above CCM was held. Through hot pressing, a membrane-electrode assembly was obtained. The hot pressing was carried out under the conditions of 160°C, 3 MPa, for 5 minutes. The membrane-electrode assembly obtained in Examples of the present application can have separators, functioning also as gas passage, laminated on the gas diffusion layers to thereby constitute the solid polymer fuel cell.

### [Evaluation of Power Generation Characteristics]

The membrane-electrode assembly obtained above was employed to evaluate the power generation characteristics under the power generation conditions such that the relative humidity on the fuel electrode/on the oxygen electrode was 100% /100%, and the current density was 1 A/cm².

Pure hydrogen was fed into the fuel electrode, and air was fed into the oxygen electrode.
Furthermore, in order to evaluate the power generation durability, employing the membrane-electrode assembly, a dry-and-wet-cycle test of a relative humidity of 100/100% RH and 0/0% RH was carried out under the conditions of a temperature of 85°C and open circuit voltage (OCV), thereby measuring time taken until the cross-leakage was caused. The membrane-electrode assembly with the time taken until cross-leakage was caused being 5,000 cycles or more was evaluated as excellent and marked as "AA". The membrane-electrode assembly with the time taken until cross-leakage was caused being 3,000 cycles or more but less than 5,000 cycles was evaluated as good and marked as "BB". The membrane-electrode assembly with the time taken until cross-leakage was caused being less than 3,000 cycles was evaluated as poor and marked as "CC". The results of the measurement of the power generation characteristics are set forth in Table 2.

**[Table 2]**

| | Ion exchange capacity | Hot water experiment 120°C × 24h | Proton conductivity | Power generation performance | Power generation durability |
|---|---|---|---|---|---|
| | meq/g | Swelling/ Shrinkage factor | (S/cm) | V(100%/100%RH 1A/cm²) | Number of dry-and-wet cycles |
| | | | | | 5000 or more: AA |
| | | | | | 3000 or more but less than 5000: BB |
| | | | | | less than 3000: CC |
| Ex.1 | 2.41 | 12 | 0.32 | 0.61 | AA |
| Ex. 2 | 2.51 | 12 | 0.34 | 0.63 | AA |
| Ex. 3 | 2.61 | 15 | 0.38 | 0.65 | AA |
| Ex. 4 | 2.40 | 12 | 0.32 | 0.59 | AA |
| Ex. 5 | 2.39 | 11 | 0.31 | 0.61 | AA |
| Ex. 6 | 2.40 | 11 | 0.31 | 0.65 | AA |
| Ex. 7 | 2.41 | 12 | 0.32 | 0.65 | AA |
| Com. Ex.1 | 2.33 | 23 | 0.31 | 0.62 | CC |

| | | | | | |
|---|---|---|---|---|---|
| *Ion exchange capacity, the result of hot water experiment, and proton conductivity are properties of the polymer used for the proton conductive membrane. | | | | | |

As shown in Table 2, it was found that by using the specific structure having no sulfonic group, the membrane-electrode assemblies of Examples of the present invention, the membrane having reduced swelling in hot water and shrinkage in drying, have superior durability against humidity change in power generation environment, compared with the membrane-electrode assembly of Comparative Example of the present invention, the membrane not having the specific structure.

### Example According To Second Embodiment

### <Preparation of Membrane-Electrode Using Polymer Structure>

On carbon blacks (furnace black) having an average diameter of 50 nm, platinum particles were supported at a mass ratio of carbon blacks:platinum = 1:1, thereby preparing catalyst particles. Then, in the polymer solution obtained in Examples 1 to 7 and Comparative Example 1 as an ion conductive binder, the above catalyst particles were uniformly dispersed at a mass ratio of the ion conductive binder: catalyst particles = 8 : 5, thereby preparing a catalyst paste.

On both sides of a Nafion membrane (manufactured by Dupont), the above catalyst paste was coated using a bar coater such that the platinum content would become 0.5 mg/cm². The coating was followed by drying. Thereby, an electrode coated membrane (Catalyst Coated Membrane, hereinafter, called "CCM") was obtained. The drying conditions were such that a drying at 100°C for 15 minutes was carried out, and then a drying was carried out at 140°C for 10 minutes.

Carbon blacks were mixed with polytetrafluoroethylene (PTFE) particles at a mass ratio of carbon blacks: PTFE particles = 4:6. A mixture obtained was uniformly dispersed in ethylene glycol to prepare a slurry, and the slurry was coated on one side of carbon paper. The slurry coated was dried, thereby providing an underlying layer. Thereby, two gas diffusion layers were prepared each formed from the underlying layer and carbon paper.

Between the underlying layer sides of the gas diffusion layers, the above CCM was held. Through hot pressing, a membrane-electrode assembly was obtained. The hot pressing was carried out under the conditions of 160°C, 3 MPa, for 5 minutes. The membrane-electrode assembly obtained in Examples of the present application can have separators, functioning also as gas passage, laminated on the gas diffusion layers to thereby constitute the solid polymer fuel cell.

### [Evaluation of Power Generation Characteristics]

The membrane-electrode assembly obtained above was employed to evaluate the power generation characteristics under the power generation conditions such that the relative humidity on the fuel electrode/on the oxygen electrode was 100% /100%, and the current density was 1 A/cm². Pure hydrogen was fed into the fuel electrode, and air was fed into the oxygen electrode. Furthermore, in order to evaluate the power generation durability, employing the membrane-electrode assembly, 5,000 cycles of a dry-and-wet-cycle test of a relative humidity of 100/100% RH and 0/0% RH were carried out under the conditions of a temperature of 85°C and open circuit voltage (OCV) . Thereby, the change of the power generation performance was evaluated as durability. The membrane-electrode assembly with the difference in the power generation performance between during early cycles and after the endurance being less than 50 mV was evaluated as excellent and marked as "AA". The membrane-electrode assembly with the difference being 50 mV or more but less than 100 mV was evaluated as good and marked as "BB". The membrane-electrode assembly with the difference being 100 mV or more was evaluated as poor and marked as "CC". The results of the measurement of the power generation characteristics are set forth in Table 3.

**[Table 3]**

| | Ion exchange capacity | Hot water experiment 120°C × 24h | Proton conductivity | Power generation performance | Power generation durability |
|---|---|---|---|---|---|
| | meq/g | Swelling/ Shrinkage factor | (S/cm) | V(100%/100%RH 1A/cm²) | Performance change after dry-and-wet cycles |
| | | | | | less than 50 mV: AA |
| | | | | | 50 or more but less than 100 mV: BB |
| | | | | | 100 mV or more: CC |
| Ex.1 | 2.41 | 12 | 0.32 | 0.61 | AA |
| Ex. 2 | 2.51 | 12 | 0.34 | 0.63 | AA |
| Ex. 3 | 2.61 | 15 | 0.38 | 0.65 | AA |
| Ex. 4 | 2.40 | 12 | 0.32 | 0.59 | AA |
| Ex. 5 | 2.39 | 11 | 0.31 | 0.61 | AA |
| Ex. 6 | 2.40 | 11 | 0.31 | 0.65 | AA |
| Ex. 7 | 2.41 | 12 | 0.32 | 0.65 | AA |
| Com. Ex.1 | 2.33 | 23 | 0.31 | 0.52 | CC |

| | | | | | |
|---|---|---|---|---|---|
| * Ion exchange capacity, the result of hot water experiment, and proton conductivity are properties of the polymer used for the ion conductive binder. As the proton conductive membrane, a Nafion membrane was used. | | | | | |

As shown in Table 3, it was found that by using the specific structure having no sulfonic group, the membrane-electrode assemblies of Examples of the present invention, the membrane having reduced swelling in hot water and shrinkage in drying, prevents the performance in high humidity from being lowered, the lowered performance being caused by the decrease in gas permeation amount in the electrodes due to swelling, compared with the membrane-electrode assembly of Comparative Example of the present invention, the membrane not having the specific structure.
A polyarylene copolymer having a sulfonic acid group which has high proton conductivity and reduced swelling in hot water and reduced shrinkage in drying; a solid polymer electrolyte and a proton conductive membrane comprising the copolymer; and a membrane-electrode assembly using these.
The polyarylene block copolymer comprises a polymer segment (A) having a sulfonic acid group, and a polymer segment (B) having substantially no sulfonic acid group, the polymer segment (B) having substantially no sulfonic acid group comprising a structural unit represented by the following formula (1).

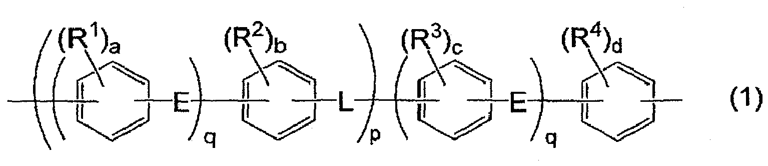

## Claims

1. A polyarylene block copolymer comprising a polymer segment (A) having a sulfonic acid group, and a polymer segment (B) having substantially no sulfonic acid group, the polymer segment (B) having substantially no sulfonic acid group comprising a structural unit represented by the following formula (1). 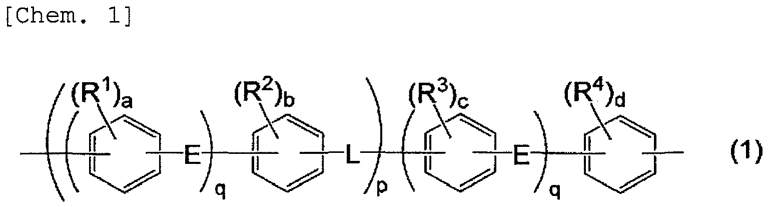 (in the formula (1), R¹ to R⁴ are each independently a halogen atom, a hydrocarbon group having 1 to 20 carbon atoms, a halogenated hydrocarbon group having 1 to 20 carbon atoms, a nitro group, or a nitrile group; E are each independently a direct bond, -O-, -S-, -CO-, -SO2-, -SO-, -CONH-, -COO-, - (CF₂)ᵢ-(i is an integer of from 1 to 10), -(CH₂)ⱼ- (j is an integer of from 1 to 10), -CR'₂- (R' is an aliphatic hydrocarbon group, an aromatic hydrocarbon group, or a halogenated hydrocarbon group), a cyclohexylidene group, or a fluorenylidene group;
L is selected from a structural unit represented by the following formula (1-1), a structural unit represented by the following formula (1-2), and a structural unit represented by the following formula (1-3);
at least one of L is a structural unit represented by the following formula (1-1), or a structural unit represented by the following formula (1-2);
a to d are each independently an integer of from 0 to 4; p is an integer of from 1 to 200, q are each independently an integer of from 0 to 4. Of single lines at ends of the structural unit, a single line one side of which does not show a substituent represents a bond with a neighboring structural unit), 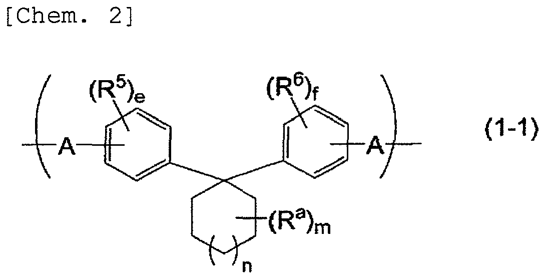 (in the formula (1-1), A are each independently -O- or -S-; R⁵ and R⁶ are each independently a halogen atom, a hydrocarbon group having 1 to 20 carbon atoms, or a halogenated hydrocarbon group having 1 to 20 carbon atoms; R^{a} are each independently a hydrocarbon group having 1 to 20 carbon atoms, or a halogenated hydrocarbon group having 1 to 20 carbon atoms; e and f are an integer of from 0 to 4; m is an integer of from 0 to 14; and n is an integer of from 0 to 10), 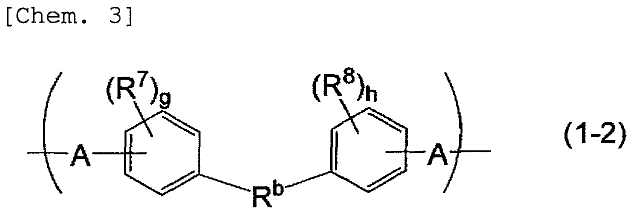 (in the formula (1-2), A are each independently -O- or -S-; R⁷ and R⁸ are each independently a halogen atom, a hydrocarbon group having 1 to 20 carbon atoms, or a halogenated hydrocarbon group having 1 to 20 carbon atoms; R^{b} are each independently a divalent polycyclic alicyclic hydrocarbon group having 7 to 20 carbon atoms; and g and h are an integer of from 0 to 4), 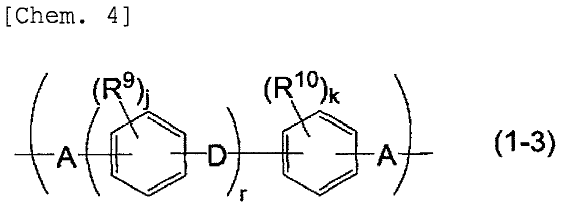 (in the formula (1-3), A are each independently -O- or -S-; D is a direct bond, -O-, -S-, -CO-, -SO₂-, -SO-, -CONH-, -COO-, -(CF₂) ₖ- (k is an integer of from 1 to 10), -(CH₂)₁- (1 is an integer of from 1 to 10), -CR'₂- (R' is an aliphatic hydrocarbon group, an aromatic hydrocarbon group, or a halogenated hydrocarbon group), a cyclohexylidene group, or a fluorenylidene group; R⁹ and R¹⁰ are each independently a halogen atom, a hydrocarbon group having 1 to 20 carbon atoms, or a halogenated hydrocarbon group having 1 to 20 carbon atoms; j and k are an integer of from 0 to 4; and r is an integer of from 0 to 4; and of single lines at ends of the structural units (1-1) to (1-3), a single line one side of which does not show a substituent represents a bond with a neighboring structural unit).

2. The polyarylene block copolymer as claimed in claim 1, wherein the number average molecular weight in terms of polystyrene of a precursor for introducing the polymer segment (B) having no sulfonic acid group is 1,000 to 50,000.

3. The polyarylene block copolymer as claimed in claim 1 or 2, wherein in the formula (1), p is 2 to 150.

4. The polyarylene block copolymer as claimed in any one of claims 1 to 3, which comprises the structural unit represented by the formula (1-1) and the structural unit represented by the formula (1-2) in a molar ratio of 100:0 to 50:50.

5. The polyarylene block copolymer as claimed in any one of claims 1 to 4, wherein the polymer segment (A) having a sulfonic acid group comprises a structural unit represented by the following formula (4). 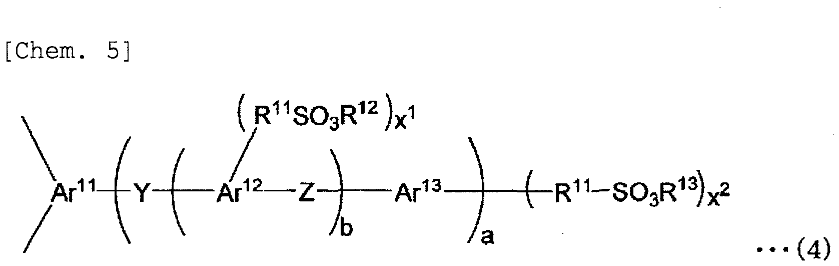 (in the formula, Ar¹¹, Ar¹², and Ar¹³ are each independently at least one structure selected from the group consisting of a benzene ring, a condensed aromatic ring, and a nitrogen-containing heterocyclic ring each of which may be substituted with a fluorine atom; Y is -CO-, -SO₂-, -SO-, -CONH-, -COO-, -(CF₂)ᵤ- (u is an integer of from 1 to 10), -C(CF₃)₂-, or a direct bond; Z is -O-, -S-, a direct bond, -CO-, -SO₂-, -SO-, -(CH₂)₁- (1 is an integer of from 1 to 10), or -C(CH₃)₂-; R¹¹ is a direct bond, -O(CH₂)ₚ-, -O(CF₂)ₚ-, -(CH₂)ₚ-, or -(CF₂)ₚ-(p is an integer of from 1 to 12) ; R¹² and R¹³ are each independently a hydrogen atom, an alkali metal atom, an aliphatic hydrocarbon group, an alicyclic group, or a heterocyclic ring containing oxygen, provided that at least one of all R¹² and R¹³ contained in the formula is a hydrogen atom; x¹ is an integer of from 0 to 4; x² is an integer of from 1 to 5; a is an integer of from 0 to 1; and b is an integer of from 0 to 3; and of single lines at ends of the structural unit, a single line one side of which does not show a substituent represents a bond with a neighboring structural unit.

6. A polymer electrolyte comprising the polyarylene block copolymer as claimed in any one of claims 1 to 5.

7. A proton conductive membrane comprising the polyarylene block copolymer as claimed in any one of claims 1 to 5.

8. A membrane-electrode assembly for a solid polymer fuel cell, wherein an anode electrode and a cathode electrode are provided on one side and the other side of the proton conductive membrane as claimed in claim 7.

9. The polymer electrolyte as claimed in claim 6, which is used for an electrode electrolyte.

10. A membrane-electrode assembly for a solid polymer fuel cell, wherein at least one of an anode electrode and a cathode electrode comprises the polymer electrolyte as claimed in claim 9.

11. An electrode paste comprising the polymer electrolyte as claimed in claim 9, an electrode catalyst, and a solvent.

12. An electrode for a fuel cell, comprising the polymer electrolyte as claimed in claim 9, and an electrode catalyst.

13. A compound represented by the following formula (1-4). 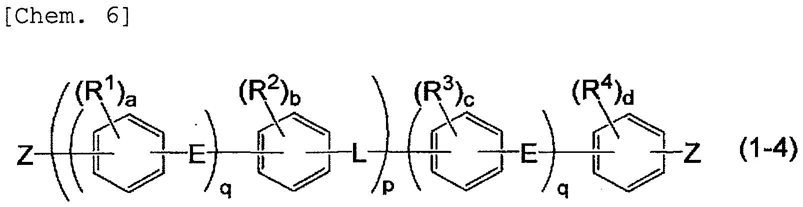 (in the formula (1-4), R¹ to R⁴ are each independently a halogen atom, a hydrocarbon group having 1 to 20 carbon atoms, a halogenated hydrocarbon group having 1 to 20 carbon atoms, a nitro group, or a nitrile group; E are each independently a direct bond, -O-, -S-, -CO-, -SO₂-, -SO-, -CONH-, -COO-, -(CF₂)ᵢ-(i is an integer of from 1 to 10), -(CH₂)ⱼ- (j is an integer of from 1 to 10), -CR'₂- (R' is an aliphatic hydrocarbon group, an aromatic hydrocarbon group, or a halogenated hydrocarbon group), a cyclohexylidene group, or a fluorenylidene group;
L is selected from a structural unit represented by the formula (1-1), a structural unit represented by the formula (1-2), and a structural unit represented by the formula (1-3);
at least one of L is a structural unit represented by the formula (1-1), or a structural unit represented by the formula (1-2) ;
a to d are each independently an integer of from 0 to 4; p is an integer of from 1 to 200; q are each independently an integer of from 0 to 4; and Z is an atom or a group selected from a halogen atom, -SO₂CH₃, -SO₂CF₃, and -NO₂).
